# EUROPEAN PATENT APPLICATION

(11) **EP 4 529 097 A1**
(43) Date of publication of application: **26.03.2025**
(21) Application number: 23829918.4
(22) Date of filing: 12.06.2023
(51) Int. Cl.: H04L 12/28

(54) **NETWORK CONNECTION METHOD, ELECTRONIC DEVICE, AND STORAGE MEDIUM**

(30) Priority: 27.06.2022 CN 202210743656
(71) Applicant: Huawei Technologies Co., Ltd., Shenzhen, Guangdong 518129 (CN)
(72) Inventor: SHI, Zhiyong, Shenzhen, Guangdong 518129 (CN); GAN, Shuaiqi, Shenzhen, Guangdong 518129 (CN); HU, Weiwei, Shenzhen, Guangdong 518129 (CN); CHEN, Jingjun, Shenzhen, Guangdong 518129 (CN)
(74) Representative: Maiwald GmbH
(86) International application number: PCT/CN2023/099608
(87) International publication number: WO 2024/001735

(57) **Abstract**

This application provides a network connection method, an electronic device, and a storage medium, and relates to the communication field. The method includes: A terminal device sends a network access request. A primary wireless access device receives the network access request, and sends a signal measurement indication. The terminal device performs measurement based on the signal measurement indication, and sends signal quality of at least one wireless access device. The primary wireless access device determines a target wireless access device based on the signal quality of the at least one wireless access device, and indicates the target wireless access device to establish a network connection to a smart home device. The method provided in this application helps improve network connection stability of the smart home device.

## Description

This application claims priority to Chinese Patent Application No. 202210743656.7, filed with the China National Intellectual Property Administration on June 27, 2022, and entitled "NETWORK CONNECTION METHOD, ELECTRONIC DEVICE, AND STORAGE MEDIUM", which is incorporated herein by reference in its entirety.

### TECHNICAL FIELD

This application relates to the communication field, and in particular, to a network connection method, an electronic device, and a storage medium.

### BACKGROUND

With continuous development of communication technologies, people usually have a plurality of smart home devices at home, for example, a smart sound box, a smart bulb, and a smart switch. However, these smart home devices usually do not have a capability of actively searching for a router with an optimal signal. Therefore, when accessing a network, the smart home device is randomly connected to a router, and may be connected to a router with a poor signal. Consequently, a network connection of the smart home device is unstable, and the smart home device may be offline, affecting user experience.

### SUMMARY

This application provides a network connection method, an electronic device, and a storage medium, to help improve network connection stability of a smart home device.

According to a first aspect, this application provides a network connection method. The method is applied to a terminal device, and includes:
sending a network access request in response to a detected operation of adding a smart home device to a network by a user, to add the smart home device to the network;
receiving a signal measurement indication;
measuring signal quality of at least one wireless access device based on the signal measurement indication, to obtain the signal quality of the at least one wireless access device; and
sending the signal quality of the at least one wireless access device, where the signal quality of the at least one wireless access device is used to determine a target wireless access device in the at least one wireless access device, and the target wireless access device is configured to establish a network connection to the smart home device.

In this application, when the smart home device is added to the network, the terminal device sends the signal quality of the at least one wireless access device to a primary wireless access device, so that the primary wireless access device can select a wireless access device with an optimal signal based on the signal quality of the at least one wireless access device. Therefore, the smart home device can be connected to the wireless access device with the optimal signal, and the smart home device can be prevented from being connected to a wireless access device with a poor signal due to random connection. This helps improve network connection stability of the smart home device.

In a possible implementation, the at least one wireless access device includes one primary wireless access device and one or more secondary wireless access devices, the primary wireless access device is configured to manage and control the one or more secondary wireless access devices, the terminal device has established a network connection to one of the one or more secondary wireless access devices, and the sending a network access request specifically includes:
sending the network access request to the secondary wireless access device that has established the network connection to the terminal device, so that the secondary wireless access device that has established the network connection to the terminal device sends the network access request to the primary wireless access device after receiving the network access request.

The receiving a signal measurement indication specifically includes:
receiving the signal measurement indication sent by the secondary wireless access device that has established the network connection to the terminal device, where the signal measurement indication is sent by the primary wireless access device to the secondary wireless access device that has established the network connection to the terminal device.

The measuring signal quality of at least one wireless access device based on the signal measurement indication, to obtain the signal quality of the at least one wireless access device specifically includes:
measuring signal quality of the primary wireless access device and signal quality of the one or more secondary wireless access devices based on the signal measurement indication, to obtain the signal quality of the primary wireless access device and the signal quality of the one or more secondary wireless access devices.

The sending the signal quality of the at least one wireless access device specifically includes:
sending the signal quality of the primary wireless access device and the signal quality of the one or more secondary wireless access devices to the secondary wireless access device that has established the network connection to the terminal device, so that the secondary wireless access device that has established the network connection to the terminal device sends the signal quality of the primary wireless access device and the signal quality of the one or more secondary wireless access devices to the primary wireless access device after receiving the signal quality of the primary wireless access device and the signal quality of the one or more secondary wireless access devices.

In this application, when the terminal device is connected to the secondary wireless access device, and the primary wireless access device has a capability of providing a wireless access service, the primary wireless access device may determine a wireless access device with an optimal signal based on the signal quality of the primary wireless access device and the signal quality of the one or more secondary wireless access devices that are reported by the terminal device, so that the wireless access device with the optimal signal can be selected to establish a network connection to the smart home device, to ensure network connection stability of the smart home device.

In a possible implementation, after the sending the signal quality of the primary wireless access device and the signal quality of the one or more secondary wireless access devices to the secondary wireless access device that has established the network connection to the terminal device, the method further includes:
maintaining the network connection to the secondary wireless access device that has established the network connection to the terminal device.

In this application, the network connection is maintained to the secondary wireless access device that has established the network connection to the terminal device, so that a best connection status can be maintained when the secondary wireless access device that has established the network connection to the terminal device is the wireless access device with the optimal signal. Therefore, network connection stability of the terminal device can be ensured.

In a possible implementation, after the sending the signal quality of the primary wireless access device and the signal quality of the one or more secondary wireless access devices to the secondary wireless access device that has established the network connection to the terminal device, the method further includes:
disconnecting the network connection to the secondary wireless access device that has established the network connection to the terminal device, and establishing a network connection to the target wireless access device.

In this application, network connection switching is performed, so that after the target wireless access device with the optimal signal is detected, a network connection of the terminal device can be switched to the target wireless access device. Therefore, network connection stability of the terminal device can be improved.

In a possible implementation, the at least one wireless access device includes one or more secondary wireless access devices, the terminal device has established a network connection to one of the one or more secondary wireless access devices, and the sending a network access request specifically includes:
sending the network access request to the secondary wireless access device that has established the network connection to the terminal device, so that the secondary wireless access device that has established the network connection to the terminal device sends the network access request to a primary wireless access device after receiving the network access request, where the primary wireless access device is configured to manage and control the one or more secondary wireless access devices.

The receiving a signal measurement indication specifically includes:
receiving the signal measurement indication sent by the secondary wireless access device that has established the network connection to the terminal device, where the signal measurement indication is sent by the primary wireless access device to the secondary wireless access device that has established the network connection to the terminal device.

The measuring signal quality of at least one wireless access device based on the signal measurement indication, to obtain the signal quality of the at least one wireless access device specifically includes:
measuring signal quality of the one or more secondary wireless access devices based on the signal measurement indication, to obtain the signal quality of the one or more secondary wireless access devices.

The sending the signal quality of the at least one wireless access device specifically includes:
sending the signal quality of the one or more secondary wireless access devices to the secondary wireless access device that has established the network connection to the terminal device, so that the secondary wireless access device that has established the network connection to the terminal device sends the signal quality of the one or more secondary wireless access devices to the primary wireless access device after receiving the signal quality of the one or more secondary wireless access devices.

In this application, when the terminal device is connected to the secondary wireless access device, and the primary wireless access device does not have a capability of providing a wireless access service, the primary wireless access device may determine a wireless access device with an optimal signal based on the signal quality of the one or more secondary wireless access devices that is reported by the terminal device, so that the wireless access device with the optimal signal can be selected to establish a network connection to the smart home device, to ensure network connection stability of the smart home device.

In a possible implementation, after the sending the signal quality of the one or more secondary wireless access devices to the secondary wireless access device that has established the network connection to the terminal device, the method further includes:
maintaining the network connection to the secondary wireless access device that has established the network connection to the terminal device.

In a possible implementation, after the sending the signal quality of the one or more secondary wireless access devices to the secondary wireless access device that has established the network connection to the terminal device, the method further includes:
disconnecting the network connection to the secondary wireless access device that has established the network connection to the terminal device, and establishing a network connection to the target wireless access device.

In a possible implementation, the at least one wireless access device includes one primary wireless access device and one or more secondary wireless access devices, the primary wireless access device is configured to manage and control the one or more secondary wireless access devices, the terminal device has established a network connection to the primary wireless access device, and the sending a network access request specifically includes:
sending the network access request to the primary wireless access device.

The receiving a signal measurement indication specifically includes:
receiving the signal measurement indication sent by the primary wireless access device.

The measuring signal quality of at least one wireless access device based on the signal measurement indication, to obtain the signal quality of the at least one wireless access device specifically includes:
measuring signal quality of the primary wireless access device and signal quality of the one or more secondary wireless access devices based on the signal measurement indication, to obtain the signal quality of the primary wireless access device and the signal quality of the one or more secondary wireless access devices.

The sending the signal quality of the at least one wireless access device specifically includes:
sending the signal quality of the primary wireless access device and the signal quality of the one or more secondary wireless access devices to the primary wireless access device.

In this application, when the terminal device is connected to the primary wireless access device, the signal quality of the primary wireless access device and the signal quality of the one or more secondary wireless access devices may be directly reported to the primary wireless access device, so that the primary wireless access device can determine a wireless access device with an optimal signal based on the signal quality of the primary wireless access device and the signal quality of the one or more secondary wireless access devices that are reported by the terminal device. Therefore, the wireless access device with the optimal signal can be selected to establish a network connection to the smart home device, to ensure network connection stability of the smart home device.

In a possible implementation, after the sending the signal quality of the primary wireless access device and the signal quality of the one or more secondary wireless access devices to the primary wireless access device, the method further includes:
maintaining the network connection to the primary wireless access device.

In a possible implementation, after the sending the signal quality of the primary wireless access device and the signal quality of the one or more secondary wireless access devices to the primary wireless access device, the method further includes:
disconnecting the network connection to the primary wireless access device, and establishing a network connection to the target wireless access device.

In a possible implementation, the target wireless access device is a wireless access device with highest signal quality in the at least one wireless access device.

According to a second aspect, this application provides a network connection method. The method is applied to a primary wireless access device, and includes:
receiving a network access request, where the network access request is used to add a smart home device to a network;
sending a signal measurement indication, where the signal measurement indication indicates a terminal device to measure signal quality of at least one wireless access device;
receiving the signal quality of the at least one wireless access device;
determining a target wireless access device in the at least one wireless access device based on the signal quality of the at least one wireless access device; and
indicating the target wireless access device to establish a network connection to the smart home device.

In this application, when the smart home device is added to the network, the primary wireless access device may select, based on the signal quality of the at least one wireless access device, a wireless access device with a good signal to establish a network connection to the smart home device. Therefore, the smart home device can be prevented from being connected to a wireless access device with a poor signal due to random connection. This helps improve network connection stability of the smart home device.

In a possible implementation, the at least one wireless access device includes the primary wireless access device and one or more secondary wireless access devices, the primary wireless access device is configured to manage and control the one or more secondary wireless access devices, the terminal device has established a network connection to one of the one or more secondary wireless access devices, and the receiving a network access request specifically includes:
receiving the network access request sent by the secondary wireless access device that has established the network connection to the terminal device, where the network access request is sent by the terminal device to the secondary wireless access device that has established the network connection to the terminal device.

The sending a signal measurement indication specifically includes:
sending the signal measurement indication to the secondary wireless access device that has established the network connection to the terminal device, so that the secondary wireless access device that has established the network connection to the terminal device sends the signal measurement indication to the terminal device after receiving the signal measurement indication, where the signal measurement indication indicates the terminal device to measure signal quality of the primary wireless access device and signal quality of the one or more secondary wireless access devices.

The receiving the signal quality of the at least one wireless access device specifically includes:
receiving the signal quality of the primary wireless access device and the signal quality of the one or more secondary wireless access devices that are sent by the secondary wireless access device that has established the network connection to the terminal device, where the signal quality of the primary wireless access device and the signal quality of the one or more secondary wireless access devices are sent by the terminal device to the secondary wireless access device that has established the network connection to the terminal device.

The determining a target wireless access device in the at least one wireless access device based on the signal quality of the at least one wireless access device specifically includes:
determining the target wireless access device in the primary wireless access device and the one or more secondary wireless access devices based on the signal quality of the primary wireless access device and the signal quality of the one or more secondary wireless access devices.

In a possible implementation, after the determining the target wireless access device in the primary wireless access device and the one or more secondary wireless access devices based on the signal quality of the primary wireless access device and the signal quality of the one or more secondary wireless access devices, the method further includes:
indicating the secondary wireless access device that has established the network connection to the terminal device to maintain the network connection to the terminal device, where the target wireless access device is the secondary wireless access device that has established the network connection to the terminal device.

In a possible implementation, after the determining the target wireless access device in the primary wireless access device and the one or more secondary wireless access devices based on the signal quality of the primary wireless access device and the signal quality of the one or more secondary wireless access devices, the method further includes:
indicating the secondary wireless access device that has established the network connection to the terminal device to disconnect the network connection to the terminal device, and indicating the target wireless access device to establish a network connection to the terminal device.

In a possible implementation, the at least one wireless access device includes one or more secondary wireless access devices, the primary wireless access device is configured to manage and control the one or more secondary wireless access devices, the terminal device has established a network connection to one of the one or more secondary wireless access devices, and the receiving a network access request specifically includes:
receiving the network access request sent by the secondary wireless access device that has established the network connection to the terminal device, where the network access request is sent by the terminal device to the secondary wireless access device that has established the network connection to the terminal device.

The sending a signal measurement indication specifically includes:
sending the signal measurement indication to the secondary wireless access device that has established the network connection to the terminal device, so that the secondary wireless access device that has established the network connection to the terminal device sends the signal measurement indication to the terminal device after receiving the signal measurement indication, where the signal measurement indication indicates the terminal device to measure signal quality of the one or more secondary wireless access devices.

The receiving the signal quality of the at least one wireless access device specifically includes:
receiving the signal quality of the one or more secondary wireless access devices that is sent by the secondary wireless access device that has established the network connection to the terminal device, where the signal quality of the one or more secondary wireless access devices is sent by the terminal device to the secondary wireless access device that has established the network connection to the terminal device.

The determining a target wireless access device in the at least one wireless access device based on the signal quality of the at least one wireless access device specifically includes:
determining the target wireless access device in the one or more secondary wireless access devices based on the signal quality of the one or more secondary wireless access devices.

In a possible implementation, after the determining the target wireless access device in the one or more secondary wireless access devices based on the signal quality of the one or more secondary wireless access devices, the method further includes:
indicating the secondary wireless access device that has established the network connection to the terminal device to maintain the network connection to the terminal device, where the target wireless access device is the secondary wireless access device that has established the network connection to the terminal device.

In a possible implementation, after the determining the target wireless access device in the one or more secondary wireless access devices based on the signal quality of the one or more secondary wireless access devices, the method further includes:
indicating the secondary wireless access device that has established the network connection to the terminal device to disconnect the network connection to the terminal device, and indicating the target wireless access device to establish a network connection to the terminal device.

In a possible implementation, the at least one wireless access device includes the primary wireless access device and one or more secondary wireless access devices, the primary wireless access device is configured to manage and control the one or more secondary wireless access devices, the primary wireless access device has established a network connection to the terminal device, and the receiving a network access request specifically includes:
receiving the network access request sent by the terminal device.

The sending a signal measurement indication specifically includes:
sending the signal measurement indication to the terminal device, where the signal measurement indication indicates the terminal device to measure signal quality of the primary wireless access device and signal quality of the one or more secondary wireless access devices.

The receiving the signal quality of the at least one wireless access device specifically includes:
receiving the signal quality of the primary wireless access device and the signal quality of the one or more secondary wireless access devices that are sent by the terminal device.

The determining a target wireless access device in the at least one wireless access device based on the signal quality of the at least one wireless access device specifically includes:
determining the target wireless access device in the primary wireless access device and the one or more secondary wireless access devices based on the signal quality of the primary wireless access device and the signal quality of the one or more secondary wireless access devices.

In a possible implementation, after the determining the target wireless access device in the primary wireless access device and the one or more secondary wireless access devices based on the signal quality of the primary wireless access device and the signal quality of the one or more secondary wireless access devices, the method further includes:
maintaining the network connection to the terminal device, where the target wireless access device is the primary wireless access device.

In a possible implementation, after the determining the target wireless access device in the primary wireless access device and the one or more secondary wireless access devices based on the signal quality of the primary wireless access device and the signal quality of the one or more secondary wireless access devices, the method further includes:
disconnecting the network connection to the terminal device, and indicating the target wireless access device to establish a network connection to the terminal device.

In a possible implementation, the target wireless access device is a wireless access device with highest signal quality in the primary wireless access device and the one or more secondary wireless access devices.

In a possible implementation, after the indicating the target wireless access device to establish a network connection to the smart home device, the method further includes:
generating and storing specified connection information, where the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

In this application, the specified connection information is stored, so that after the smart home device is disconnected, the smart home device may be connected to a wireless access device with an optimal signal based on the stored specified connection information. Therefore, network connection stability of the smart home device can be ensured.

In a possible implementation, the generating specified connection information specifically includes:
generating the specified connection information based on a current network connection relationship in response to a detected operation of updating the primary wireless access device by a user, where the network connection relationship is used to represent that a network connection relationship has been established between a wireless access device and a smart home device.

In this application, an update operation is performed on the primary wireless access device, so that the specified connection information may be generated in batches for the online smart home device. Therefore, generation efficiency of the specified connection information can be improved.

In a possible implementation, after the generating and storing specified connection information, the method further includes:
if failing to indicate indicating, based on the specified connection information, the target wireless access device to establish a network connection to the smart home device, indicating another wireless access device to establish a network connection to the smart home device, where the another wireless access device is a wireless access device other than the target wireless access device in the at least one wireless access device.

In this application, after the network connection fails to be established based on the specified connection information, the another wireless access device may be indicated to establish the network connection to the smart home device. Therefore, disconnection of the smart home device can be avoided.

In a possible implementation, after the generating and storing specified connection information, the method further includes:
if consecutively failing to indicate, for a plurality of times based on the specified connection information, the target wireless access device to establish a network connection to the smart home device, deleting the mapping relationship between the target wireless access device and the smart home device from the specified connection information.

In this application, after the target wireless access device fails to establish a network connection to the smart home device for a plurality of times, the mapping relationship between the target wireless access device and the smart home device is deleted, so that a wireless access device whose signal quality deteriorates can be removed from the specified connection information, and the smart home device can be prevented from being connected to a wireless access device with a poor signal.

According to a third aspect, this application provides a network connection method. The method is applied to a secondary wireless access device, the secondary wireless access device has established a network connection to a terminal device, and the method includes:
receiving a network access request sent by the terminal device, where the network access request is used to add a smart home device to a network;
sending the network access request to a primary wireless access device, where the primary wireless access device is configured to manage and control one or more secondary wireless access devices;
receiving a signal measurement indication sent by the primary wireless access device, where the signal measurement indication indicates the terminal device to measure signal quality of at least one wireless access device;
sending the signal measurement indication to the terminal device;
receiving the signal quality of the at least one wireless access device that is sent by the terminal device; and
sending the signal quality of the at least one wireless access device to the primary wireless access device, so that the primary wireless access device determines a target access device in the at least one wireless access device based on the signal quality of the at least one wireless access device, where the target wireless access device is configured to establish a network connection to the smart home device.

In this application, the signal quality of the at least one wireless access device that is received from the terminal device is sent to the primary wireless access device, so that the primary wireless access device can make a decision based on the signal quality of the at least one wireless access device. Therefore, a network connection between a wireless access device with an optimal signal and the smart home device can be implemented.

In a possible implementation, the signal measurement indication indicates the terminal device to measure signal quality of the primary wireless access device and signal quality of the one or more secondary wireless access devices.

The receiving the signal quality of the at least one wireless access device that is sent by the terminal device specifically includes:
receiving the signal quality of the primary wireless access device and the signal quality of the one or more secondary wireless access devices that are sent by the terminal device.

The sending the signal quality of the at least one wireless access device to the primary wireless access device, so that the primary wireless access device determines a target access device in the at least one wireless access device based on the signal quality of the at least one wireless access device specifically includes:
sending the signal quality of the primary wireless access device and the signal quality of the one or more secondary wireless access devices to the primary wireless access device, so that the primary wireless access device determines the target access device in the primary wireless access device and the one or more secondary wireless access devices based on the signal quality of the primary wireless access device and the signal quality of the one or more secondary wireless access devices.

In a possible implementation, the signal measurement indication indicates the terminal device to measure signal quality of the one or more secondary wireless access devices.

The receiving the signal quality of the at least one wireless access device that is sent by the terminal device specifically includes:
receiving the signal quality of the one or more secondary wireless access devices that is sent by the terminal device.

The sending the signal quality of the at least one wireless access device to the primary wireless access device, so that the primary wireless access device determines a target access device in the at least one wireless access device based on the signal quality of the at least one wireless access device specifically includes:
sending the signal quality of the one or more secondary wireless access devices to the primary wireless access device, so that the primary wireless access device determines the target access device in the one or more secondary wireless access devices based on the signal quality of the one or more secondary wireless access devices.

In a possible implementation, the method further includes:
receiving a connection indication sent by the primary wireless access device; and
establishing a network connection to the smart home device based on the connection indication.

In a possible implementation, the method further includes:
maintaining the network connection to the terminal device.

In a possible implementation, the method further includes:
receiving a disconnection indication sent by the primary wireless access device; and
disconnecting the network connection to the terminal device based on the disconnection indication.

According to a fourth aspect, this application provides a network connection apparatus. The apparatus is used in a terminal device, and includes one or more functional modules. The one or more functional modules are configured to implement the network connection method according to the first aspect.

According to a fifth aspect, this application provides a network connection apparatus. The apparatus is used in a primary wireless access device, and includes one or more functional modules. The one or more functional modules are configured to implement the network connection method according to the second aspect.

According to a sixth aspect, this application provides a network connection apparatus. The apparatus is used in a secondary wireless access device, and includes one or more functional modules. The one or more functional modules are configured to implement the network connection method according to the third aspect.

According to a seventh aspect, this application provides a terminal device. The terminal device includes a processor and a memory. The memory is configured to store a computer program. The processor is configured to run the computer program, to enable the terminal device to implement the network connection method according to the first aspect.

According to an eighth aspect, this application provides a primary wireless access device. The primary wireless access device includes a processor and a memory. The memory is configured to store a computer program. The processor is configured to run the computer program, to enable the primary wireless access device to implement the network connection method according to the second aspect.

According to a ninth aspect, this application provides a secondary wireless access device. The secondary wireless access device includes a processor and a memory. The memory is configured to store a computer program. The processor is configured to run the computer program, to enable the secondary wireless access device to implement the network connection method according to the third aspect.

According to a tenth aspect, this application provides a communication system. The system includes the terminal device according to the seventh aspect, the primary wireless access device according to the eighth aspect, one or more secondary wireless access devices, and a smart home device.

According to an eleventh aspect, this application provides a computer-readable storage medium. The computer-readable storage medium stores a computer program. When the computer program is run on a computer, the computer is enabled to implement the network connection method according to any one of the first aspect to the third aspect.

### BRIEF DESCRIPTION OF DRAWINGS

FIG. 1a and FIG. 1b are architectural diagrams of application scenarios according to embodiments of this application;
FIG. 2a is a diagram of a structure of a terminal device according to an embodiment of this application;
FIG. 2b is a diagram of a structure of a wireless access device according to an embodiment of this application;
FIG. 3 is a schematic flowchart of an embodiment of a network connection method according to this application;
FIG. 4 is a schematic flowchart of another embodiment of a network connection method according to this application;
FIG. 5 is a schematic flowchart of still another embodiment of a network connection method according to this application;
FIG. 6 is a diagram of an embodiment of a structure of a network connection apparatus according to this application;
FIG. 7 is a diagram of another embodiment of a structure of a network connection apparatus according to this application; and
FIG. 8 is a diagram of still another embodiment of a structure of a network connection apparatus according to this application.

### DESCRIPTION OF EMBODIMENTS

In embodiments of this application, unless otherwise specified, the character "/" indicates an "or" relationship between associated objects. For example, A/B may indicate A or B. "And/or" describes an association relationship between associated objects, and indicates that three relationships may exist. For example, A and/or B may represent the following three cases: Only A exists, both A and B exist, and only B exists.

It should be noted that, terms such as "first" and "second" in embodiments of this application are merely used for distinction in description, and cannot be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof refers to any combination of these items, including any combination of singular items (pieces) or plural items (pieces). For example, at least one of A, B, or C may represent A, B, C, A and B, A and C, B and C, or A, B, and C. A, B, and C each may be an element, or may be a set that includes one or more elements.

In embodiments of this application, "example", "in some embodiments", "in another embodiment", and the like are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that when "equal to" is used together with "greater than", "equal to" cannot be used together with "less than"; and when "equal to" is used together with "less than", "equal to" cannot be used together with "greater than".

With continuous development of communication technologies, people usually have a plurality of smart home devices at home, for example, a smart sound box, a smart bulb, and a smart switch. However, these smart home devices usually do not have a capability of actively searching for a router with an optimal signal. Therefore, when accessing a network, the smart home device is randomly connected to a router, and may be connected to a router with a poor signal. Consequently, a network connection of the smart home device is unstable, and the smart home device may be offline, affecting user experience.

Based on the foregoing problem, embodiments of this application provide a network connection method.

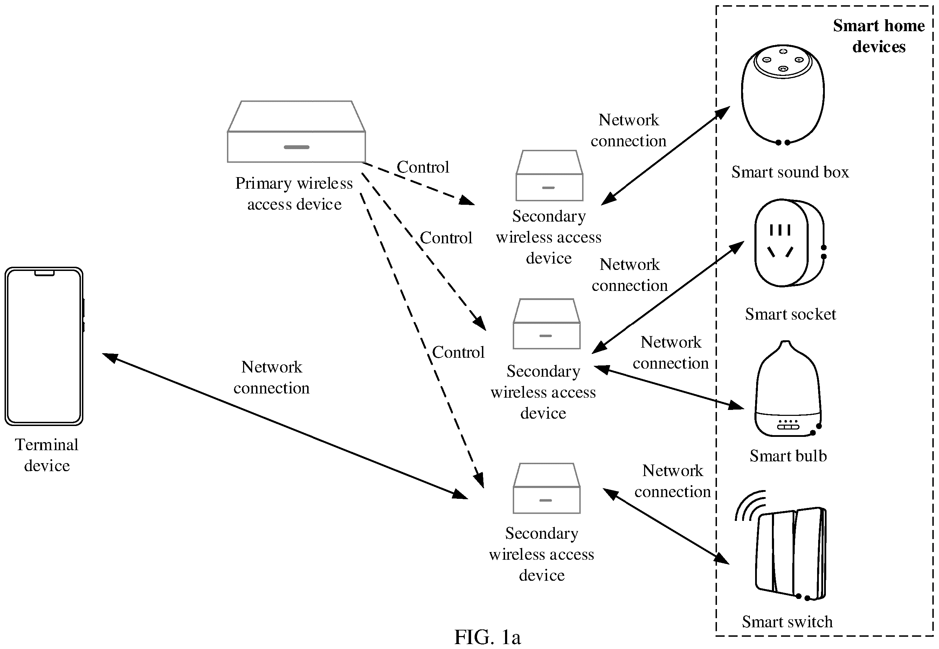

With reference to FIG. 1a, FIG. 1b, FIG. 2a, FIG. 2b, and FIG. 3 to FIG. 5, the network connection method provided in embodiments of this application is described herein.

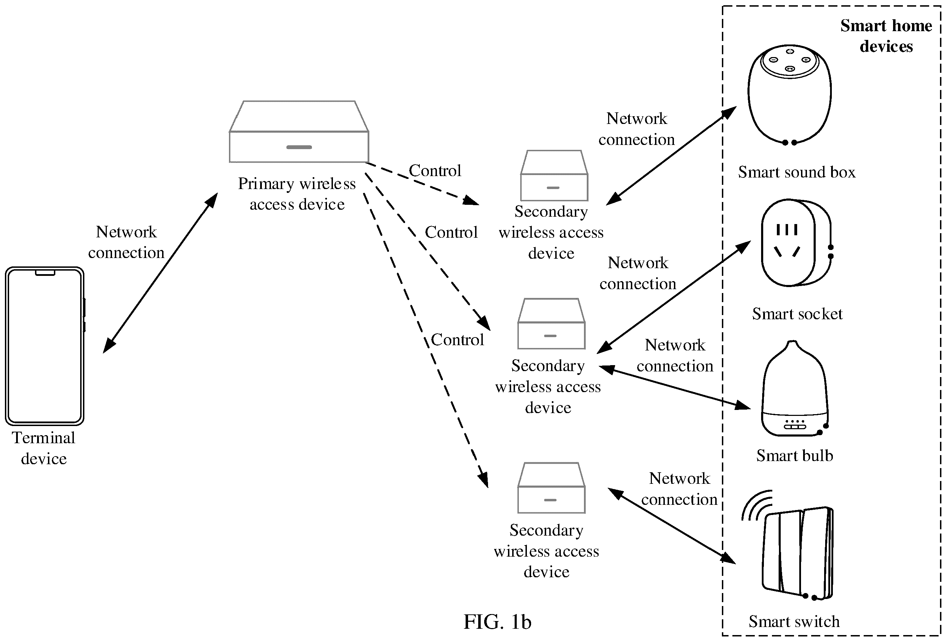

FIG. 1a and FIG. 1b are architectural diagrams of application scenarios according to embodiments of this application. The foregoing application scenario includes a terminal device, a smart home device, a primary wireless access device, and one or more secondary wireless access devices. The terminal device may be an electronic device having a wireless access capability, for example, a mobile phone or a tablet. A form of the terminal device is not specially limited in this application. A third-party application (APP), for example, an AI life APP, may be pre-installed on the terminal device. The third-party application may be used to: connect the smart home device to a network, and manage and control the smart home device connected to the network. The smart home device may be a smart device that has a network access capability in a home, for example, a smart sound box, a smart television, a smart refrigerator, a smart air conditioner, a smart bulb, or a smart switch. A form of the smart home device is not specially limited in embodiments of this application. A wireless access device is an electronic device that may directly or indirectly provide a wireless access service, for example, a router. A specific form of the wireless access device is not specifically limited in embodiments of this application. For example, the wireless access device is a router. The primary wireless access device may be referred to as a mother router, or may be referred to as a primary router. The primary wireless access device may be configured to manage and control the one or more secondary wireless access devices. It may be understood that the primary wireless access device may directly provide a wireless access service. For example, the terminal device may directly establish a network connection to the primary wireless access device, so that the terminal device can directly communicate with the primary wireless access device. Alternatively, the primary wireless access device may indirectly provide a wireless access service. For example, the primary wireless access device does not directly communicate with the terminal device, and does not directly establish a network connection to the terminal device. Communication between the primary wireless access device and the terminal device may be implemented through the secondary wireless access device. The terminal device may send data to the secondary wireless access device, and then the secondary wireless access device forwards the data to the primary wireless access device. Similarly, the primary wireless access device may also send data to the secondary wireless access device, and then the secondary wireless access device forwards the data to the terminal device. The secondary wireless access device may be referred to as a child router, or may be referred to as a secondary router or an access point (Access Point, AP), and is configured to establish a network connection to the smart home device and/or the terminal device under management and control of the primary wireless access device. Therefore, the secondary wireless access device may directly provide a wireless access service. The wireless access service may include a wireless fidelity (Wireless Fidelity, Wi-Fi)-based service.

Different application scenarios may be classified based on capabilities of wireless access services provided by the primary wireless access device.

FIG. 1a is an application scenario in which the primary wireless access device indirectly provides a wireless access service. As shown in FIG. 1a, the primary wireless access device manages and controls the one or more secondary wireless access devices, the primary wireless access device and the terminal device cannot directly establish a network connection, and the primary wireless access device and the terminal device cannot directly communicate with each other. The terminal device has established a network connection to a secondary wireless access device.

FIG. 1b is an application scenario in which the primary wireless access device directly provides a wireless access service. As shown in FIG. 1b, the primary wireless access device manages and controls the one or more secondary wireless access devices, the primary wireless access device and the terminal device can directly establish a network connection, and the primary wireless access device and the terminal device can directly communicate with each other. The terminal device can also establish a network connection to a secondary wireless access device.

A networking manner between the primary wireless access device and the one or more secondary wireless access devices may be connection through a network cable, connection through a wire, connection in a wireless manner, or hybrid connection using a plurality of the network cable, the wire, and the wireless manner. The networking manner between the primary wireless access device and the secondary wireless access device is not specially limited in this application.

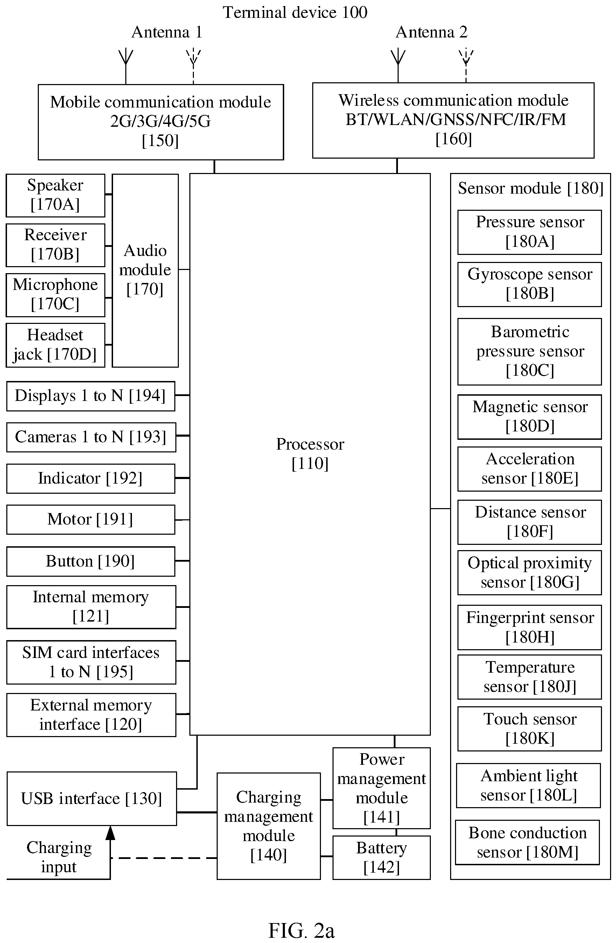

FIG. 2a is a diagram of a structure of a terminal device 100 according to an embodiment of this application.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and implement analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI, to implement a display function of the terminal device 100.

The GPIO interface may be configured by using software. The GPIO interface may be configured as a control signal interface, or may be configured as a data signal interface. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with a USB standard specification, and may be specifically a mini USB interface, a micro USB interface, a USB type C interface, or the like. The USB interface 130 may be configured to connect to a charger to charge the terminal device 100, may be configured to transmit data between the terminal device 100 and a peripheral device, and may be configured to connect to a headset to play audio through the headset. The interface may be further configured to connect to another electronic device, for example, an AR device.

It may be understood that an interface connection relationship between the modules shown in this embodiment of the present invention is merely an example for description, and does not constitute a limitation on the structure of the terminal device 100. In some other embodiments of this application, the terminal device 100 may alternatively use an interface connection manner different from that in this embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the terminal device 100. When charging the battery 142, the charging management module 140 may further supply power to an electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery status of health (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the terminal device 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and the amplified signal is converted by the antenna 1 into an electromagnetic wave for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (which is not limited to the speaker 170A or the receiver 170B), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the terminal device 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the terminal device 100 is coupled to the mobile communication module 150, and the antenna 2 is coupled to the wireless communication module 160, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may further process another digital signal in addition to the digital image signal. For example, when the terminal device 100 selects a frequency, the digital signal processor is configured to perform Fourier transform and the like on energy of the frequency.

The video codec is configured to compress or decompress a digital video. The terminal device 100 may support one or more video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, with reference to a transfer mode between human brain neurons, and may further continuously perform self-learning. Application such as intelligent cognition of the terminal device 100, for example, image identification, facial identification, speech identification, and text understanding, may be implemented through the NPU.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application program required by at least one function (for example, a sound playing function or an image playing function), and the like. The data storage area may store data (for example, audio data, and a phone book) created in a process of using the terminal device 100, and the like. In addition, the internal memory 121 may include a high-speed random access memory, and may further include a nonvolatile memory, for example, at least one magnetic disk storage component, a flash memory component, or a universal flash storage (universal flash storage, UFS). The processor 110 runs instructions stored in the internal memory 121 and/or instructions stored in the memory disposed in the processor, to perform various function applications and data processing of the terminal device 100.

The terminal device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The terminal device 100 may be configured to listen to music or answer a hands-free call through the speaker 170A.

The receiver 170B, also referred to as an "earpiece", is configured to convert an electrical audio signal into a sound signal. When the terminal device 100 is used to answer a call or receive voice information, a voice may be received by placing the receiver 170B close to an ear.

The microphone 170C, also referred to as a "mike" or a "mic", is configured to convert a sound signal into an electrical signal. When making a call or sending voice information, a user may place the mouth close to the microphone 170C to make a sound, to input a sound signal into the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, identify a sound source, implement a directional recording function, and so on.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates with conductive materials. When a force is applied to the pressure sensor 180A, a capacitance between electrodes changes. The terminal device 100 determines intensity of pressure based on a change of the capacitance. When a touch operation is performed on the display 194, the terminal device 100 detects strength of the touch operation through the pressure sensor 180A. The terminal device 100 may also calculate a touch position based on a detection signal of the pressure sensor 180A. In some embodiments, touch operations that are performed at a same touch position but have different touch operation strength may correspond to different operation instructions. For example, when a touch operation whose touch operation strength is less than a first pressure threshold is performed on a short message service message application icon, an instruction for viewing a short message service message is executed. When a touch operation whose touch operation strength is greater than or equal to the first pressure threshold is performed on the short message service message application icon, an instruction for newly creating a short message service message is executed.

The gyroscope sensor 180B may be configured to determine a motion posture of the terminal device 100. In some embodiments, angular velocities of the terminal device 100 around three axes (that is, an x-axis, a y-axis, and a z-axis) may be determined through the gyroscope sensor 180B. The gyroscope sensor 180B may be configured to implement image stabilization during photographing. For example, when the shutter is pressed, the gyroscope sensor 180B detects an angle at which the terminal device 100 shakes, and calculates, based on the angle, a distance that needs to be compensated by a lens module, so that a lens cancels shaking of the terminal device 100 through reverse motion, to implement image stabilization. The gyroscope sensor 180B may be further used in scenarios of navigation and motion sensing gaming.

The barometric pressure sensor 180C is configured to measure barometric pressure. In some embodiments, the terminal device 100 calculates an altitude based on a value of the barometric pressure measured by the barometric pressure sensor 180C, to assist in positioning and navigation.

The magnetic sensor 180D includes a Hall sensor. The terminal device 100 may detect opening and closing of a flip leather case through the magnetic sensor 180D. In some embodiments, when the terminal device 100 is a flip phone, the terminal device 100 may detect opening and closing of a flip cover through the magnetic sensor 180D. Further, features such as automatic unlocking through flipping are set based on a detected opening/closing state of the leather case or the flip cover.

The acceleration sensor 180E may detect magnitudes of accelerations of the terminal device 100 in various directions (usually along the three axes). When the terminal device 100 is stationary, a magnitude and a direction of gravity may be detected. The acceleration sensor 180E may be further configured to identify a posture of the electronic device, and is used in applications such as landscape/portrait orientation switching and a pedometer.

The distance sensor 180F is configured to measure a distance. The terminal device 100 may measure the distance by using infrared or lasers. In some embodiments, in a photographing scenario, the terminal device 100 may use the distance sensor 180F to measure a distance to implement fast focusing.

The optical proximity sensor 180G may include, for example, a light-emitting diode (LED) and an optical detector, for example, a photodiode. The light-emitting diode may be an infrared light-emitting diode. The terminal device 100 emits infrared light through the light-emitting diode. The terminal device 100 uses the photodiode to detect infrared reflected light from a nearby object. When sufficient reflected light is detected, it may be determined that there is an object near the terminal device 100. When insufficient reflected light is detected, the terminal device 100 may determine that there is no object near the terminal device 100. The terminal device 100 may detect, through the optical proximity sensor 180G, whether the user holds the terminal device 100 close to an ear to make a call, to automatically turn off a screen to save power. The optical proximity sensor 180G may be further used in a leather case mode or a pocket mode to automatically unlock or lock the screen.

The ambient light sensor 180L is configured to sense ambient light brightness. The terminal device 100 may adaptively adjust brightness of the display 194 based on the sensed ambient light brightness. The ambient light sensor 180L may be further configured to automatically adjust a white balance during photographing. The ambient light sensor 180L may further cooperate with the optical proximity sensor 180G to detect whether the terminal device 100 is in a pocket, to implement mistouch prevention.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 lowers performance of a processor near the temperature sensor 180J, to reduce power consumption and implement thermal protection. In some other embodiments, when the temperature is less than another threshold, the terminal device 100 heats the battery 142, to avoid abnormal shutdown of the terminal device 100 caused by a low temperature. In some other embodiments, when the temperature is less than still another threshold, the terminal device 100 boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 form a touchscreen. The touchscreen is also referred to as a "touch panel". The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the terminal device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is also compatible with different types of SIM cards. The SIM card interface 195 is also compatible with an external storage card. The terminal device 100 interacts with a network through the SIM card, to implement functions such as a call and data communication. In some embodiments, an eSIM, namely, an embedded SIM card, is used for the terminal device 100. The eSIM card may be embedded into the terminal device 100, and cannot be separated from the terminal device 100.

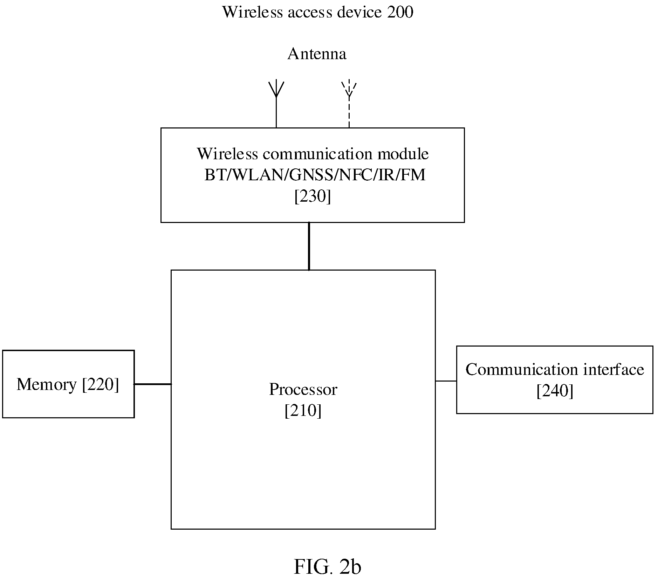

FIG. 2b is a diagram of a structure of a wireless access device 200 according to an embodiment of this application. The wireless access device 200 may include at least one processor and at least one memory communicatively connected to the processor. The wireless access device 200 may be the primary wireless access device or the secondary wireless access device. The memory stores a program instruction that can be executed by the processor, and the processor may invoke the program instruction to perform an action performed by the wireless access device provided in embodiments of this application.

As shown in FIG. 2b, components of the wireless access device 200 may include but are not limited to one or more processors 210, a memory 220, a wireless communication module 230, and a communication interface 240.

The wireless access device 200 typically includes a plurality of computer system readable media. These media may be any available media that can be accessed by the wireless access device 200, and includes volatile and non-volatile media, and removable and non-removable media.

The processor 210 may include one or more processing units. For example, the processor 210 may include an application processor (application processor, AP), a modem processor, a controller, a video codec, a digital signal processor (digital signal processor, DSP), and a baseband processor. Different processing units may be independent components, or may be integrated into one or more processors.

The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data that has just been used or is cyclically used by the processor 210. If the processor 210 needs to use the instructions or the data again, the processor 210 may directly invoke the instructions or the data from the memory. This avoids repeated access, reduces waiting time of the processor 210, and improves system efficiency.

The memory 220 may include a computer system readable medium in a form of a volatile memory, for example, a random access memory (Random Access Memory, RAM) and/or a cache. The wireless access device 200 may further include another removable/unmovable and volatile/non-volatile computer system storage medium. Although not shown in FIG. 2b, a disk driver configured to read data from and write data into a removable and non-volatile disk (for example, a "floppy disk") may be provided, and an optical disc driver configured to read data from and write data into a removable and non-volatile optical disc (for example, a compact disc read-only memory (Compact Disc Read-Only Memory, CD-ROM), a digital versatile disc read-only memory (Digital Video Disc Read-Only Memory, DVD-ROM), or another optical medium) may be provided. The memory 220 may include at least one program product, the program product includes a set of (for example, at least one) program modules, and these program modules are configured to perform functions in embodiments of this application.

A program/utility including a set of (at least one) program modules may be stored in the memory 220. Such a program module includes but is not limited to an operating system, one or more application programs, another program module, and program data. Each of or a specific combination of these examples may include implementation of a network environment. The program module usually performs a function and/or a method in embodiments of this application.

The wireless access device 200 may also communicate with one or more devices that enable a user to interact with the wireless access device 200, and/or communicate with any device (for example, a network interface card or a modem) that enables the wireless access device 200 to communicate with one or more other computing devices. Such communication may be performed through the communication interface 240. In addition, the wireless access device 200 may further communicate with one or more networks (for example, a local area network (Local Area Network, LAN), a wide area network (Wide Area Network, WAN), and/or a public network, for example, the Internet) through a network adapter (not shown in FIG. 2b). It should be understood that, although not shown in FIG. 2b, other hardware and/or software modules may be used in combination with the wireless access device 200, including but not limited to: microcode, a device driver, a redundancy processing unit, an external disk drive array, a disk array (Redundant Array of Independent Disks, RAID) system, a tape driver, a data backup storage system, and the like.

A wireless communication function of the wireless access device 200 may be implemented through an antenna, the wireless communication module 230, the modem processor, the baseband processor, and the like.

The antenna is configured to transmit and receive electromagnetic wave signals. Each antenna in the wireless access device 200 may be configured to cover one or more communication frequency bands. Different antennas may be further multiplexed, to improve antenna utilization. For example, the antenna may be multiplexed as a diversity antenna in a wireless local area network. In some other embodiments, the antenna may be used in combination with a tuning switch.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. In some embodiments, the modem processor may be an independent component. In some other embodiments, the modem processor may be independent of the processor 210, and is disposed in a same component as another functional module.

The wireless communication module 230 may provide a solution that is applied to the wireless access device 200 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 930 may be one or more components integrating at least one communication processing module. The wireless communication module 230 receives an electromagnetic wave through the antenna, performs frequency modulation and filtering processing on an electromagnetic wave signal, and sends a processed signal to the processor 210. The wireless communication module 230 may further receive a to-be-sent signal from the processor 210, perform frequency modulation and amplification on the signal, and convert the signal into an electromagnetic wave through the antenna for radiation.

In some embodiments, the antenna is coupled to the wireless communication module 230, so that the wireless access device 200 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

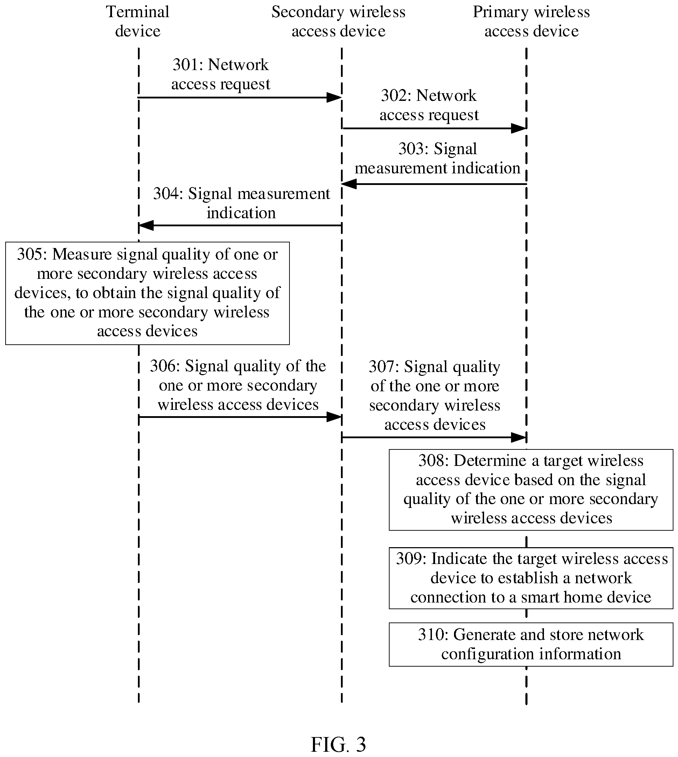

Next, the application scenario shown in FIG. 1a is used as an example to describe, with reference to FIG. 3, the network connection method provided in this application.

FIG. 3 is a schematic flowchart of an embodiment of a network connection method according to this application. In the embodiment shown in FIG. 3, a terminal device has established a network connection to a secondary wireless access device. When a smart home device is ready to join a network, a primary wireless access device may determine a target wireless access device based on signal quality of one or more secondary wireless access devices that is sent by the secondary wireless access device that has established the network connection to the terminal device, and indicate the target wireless access device to establish a network connection to the smart home device. The method specifically includes the following steps:

Step 301: In response to a detected operation of adding the smart home device to the network by a user, the terminal device sends a network access request to the secondary wireless access device that has established the network connection to the terminal device, to add the smart home device to the network. Correspondingly, the secondary wireless access device that has established the network connection to the terminal device receives the network access request sent by the terminal device.

Specifically, the user may perform, on a third-party application of the terminal device, the operation of adding the smart home device to the network. The third-party application is an application program corresponding to the smart home device. For example, the third-party application is a Huawei AI life APP. The AI life APP may be used to add, manage, and control a smart home device produced by Huawei. In response to the detected operation of adding the smart home device to the network by the user, the terminal device may send the network access request to the secondary wireless access device that has established the network connection to the terminal device, to add the smart home device to the network.

The secondary wireless access device that has established the network connection to the terminal device may be any secondary wireless access device selected by the user with a manual operation before the user adds the smart home device to the network. For example, the user may disable a wireless access control button on the terminal device, and then enable the wireless access control button, to trigger the terminal device to search for a surrounding secondary wireless access device, so that the terminal device can find a secondary wireless access device with a good signal, and establish a network connection to the secondary wireless access device with the good signal.

In some optional embodiments, the secondary wireless access device that has established the network connection to the terminal device may alternatively be any secondary wireless access device selected by the user from a secondary wireless access device list. This is not specifically limited in this embodiment of this application.

Step 302: In response to the received network access request, the secondary wireless access device that has established the network connection to the terminal device sends the network access request to the primary wireless access device. Correspondingly, the primary wireless access device receives the network access request sent by the secondary wireless access device that has established the network connection to the terminal device.

Step 303: In response to the received network access request, the primary wireless access device sends a signal measurement indication to the secondary wireless access device that has established the network connection to the terminal device, to indicate the terminal device to measure the signal quality of the one or more secondary wireless access devices. Correspondingly, the secondary wireless access device that has established the network connection to the terminal device receives the signal measurement indication sent by the primary wireless access device.

Specifically, in this embodiment of this application, because the primary wireless access device does not have a capability of directly providing a wireless access service, in other words, the primary wireless access device cannot directly establish a network connection to the smart home device, the terminal device does not need to measure signal quality of the primary wireless access device. Therefore, the primary wireless access device may indicate the terminal device to measure only the signal quality of the one or more secondary wireless access devices. In other words, the primary wireless access device may indicate the terminal device to measure only the signal quality of the secondary wireless access device, and not to measure the signal quality of the primary wireless access device.

Step 304: In response to the received signal measurement indication, the secondary wireless access device that has established the network connection to the terminal device sends the signal measurement indication to the terminal device. Correspondingly, the terminal device receives the signal measurement indication sent by the secondary wireless access device that has established the network connection to the terminal device.

Step 305: The terminal device measures the signal quality of the one or more secondary wireless access devices based on the signal measurement indication, to obtain the signal quality of the one or more secondary wireless access devices.

Specifically, after receiving the signal measurement indication, the terminal device may measure the signal quality of the one or more secondary wireless access devices surrounding the terminal device. For example, the terminal device may measure transmit power of a radio frequency signal of the one or more surrounding secondary wireless access devices, or the terminal device may measure receive power of a radio frequency signal of the one or more surrounding secondary wireless access devices, to obtain the signal quality of the one or more secondary wireless access devices.

It may be understood that the smart home device has no capability of searching for signal quality of a wireless access device. The terminal device sends the signal quality of the one or more secondary wireless access devices to the primary wireless access device, so that the primary wireless access device can determine the target wireless access device in the one or more secondary wireless access devices based on the signal quality of the one or more secondary wireless access devices, and indicate the target wireless access device to establish a network connection to the smart home device. Therefore, a problem of an unstable network connection caused by random connection of the smart home device to a wireless access device can be resolved.

Step 306: The terminal device sends the signal quality of the one or more secondary wireless access devices to the secondary wireless access device that has established the network connection to the terminal device. Correspondingly, the secondary wireless access device that has established the network connection to the terminal device receives the signal quality of the one or more secondary wireless access devices that is sent by the terminal device.

Step 307: In response to the received signal quality of the one or more secondary wireless access devices, the secondary wireless access device that has established the network connection to the terminal device sends the signal quality of the one or more secondary wireless access devices to the primary wireless access device. Correspondingly, the primary wireless access device receives the signal quality of the one or more secondary wireless access devices that is sent by the secondary wireless access device that has established the network connection to the terminal device.

Step 308: The primary wireless access device determines the target wireless access device in the one or more secondary wireless access devices based on the signal quality of the one or more secondary wireless access devices.

Specifically, after receiving the signal quality of the one or more secondary wireless access devices, the primary wireless access device may determine the target wireless access device in the one or more secondary wireless access devices based on the signal quality of the one or more secondary wireless access devices. For example, the primary wireless access device may select a secondary wireless access device with highest signal quality as the target wireless access device, or may select a secondary wireless access device whose signal quality is higher than a preset threshold as the target wireless access device. This is not specifically limited in this embodiment of this application.

Step 309: The primary wireless access device indicates the target wireless access device to establish a network connection to the smart home device.

Specifically, after determining the target wireless access device, the primary wireless access device may send a connection indication to the target wireless access device, to indicate the target wireless access device to establish a network connection to the smart home device. Correspondingly, the target wireless access device receives the connection indication sent by the primary wireless access device. After receiving the connection indication, the target wireless access device may establish a network connection to the smart home device based on the connection indication. For example, that a wireless access technology is Wi-Fi is used as an example, and the target wireless access device may exchange a Wi-Fi packet with the smart home device based on the connection indication of the primary wireless access device, and therefore may establish a network connection to the smart home device in a specific frequency band and on a specific channel.

It may be understood that the target wireless access device may be the secondary wireless access device that has established the network connection to the terminal device. For example, the secondary wireless access device that has established the network connection to the terminal device is a wireless access device with highest signal quality in secondary wireless access devices. Alternatively, the target wireless access device may not be the secondary wireless access device that has established the network connection to the terminal device. When the target wireless access device is the secondary wireless access device that has established the network connection to the terminal device, the primary wireless access device may indicate the secondary wireless access device that has established the network connection to the terminal device to establish a network connection to the smart home device. When the target wireless access device is not the secondary wireless access device that has established the network connection to the terminal device, the primary wireless access device may indicate the target wireless access device to establish a network connection to the smart home device.

In some optional embodiments, if the primary wireless access device indicates the secondary wireless access device that has established the network connection to the terminal device to establish a network connection to the smart home device, it indicates that signal quality of the secondary wireless access device that has established the network connection to the terminal device is the highest or relatively high in the one or more secondary wireless access devices, and the secondary wireless access device that has established the network connection to the terminal device may further continue to maintain the network connection to the terminal device. Therefore, network stability of the terminal device can be maintained.

In some optional embodiments, if the primary wireless access device indicates the target wireless access device to establish a network connection to the smart home device, and the target wireless access device is not the secondary wireless access device that has established the network connection to the terminal device, it indicates that signal quality of the target wireless access device is the highest or relatively high in the one or more secondary wireless access devices. In this case, the primary wireless access device may further send a disconnection indication to the secondary wireless access device that has established the network connection to the terminal device, to indicate the secondary wireless access device that has established the network connection to the terminal device to disconnect the network connection to the terminal device; and may indicate the target wireless access device to establish a network connection to the terminal device. Therefore, network connection stability of the terminal device can be improved.

Step 310: The primary wireless access device generates and stores specified connection information, where the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

Specifically, after the target wireless access device establishes the network connection to the smart home device, the primary wireless access device may generate the specified connection information, and store the specified connection information. The specified connection information is used to represent the mapping relationship between the target wireless access device and the smart home device. The specified connection information may be further used by the primary wireless access device to indicate, based on the specified connection information when the smart home device is disconnected from a network and re-accesses the network, the target wireless access device to re-establish a network connection to the smart home device. For example, when the smart home device, the target wireless access device, or the primary wireless access device is powered off and then powered on, when the smart home device, the target wireless access device, or the primary wireless access device is restarted, when the target wireless access device or the primary wireless access device is upgraded, when the target wireless access device or the primary wireless access device performs network optimization, or when a signal of the target wireless access device becomes weaker due to environmental interference, the smart home device disconnects the current network connection, and re-establishes a network connection. When the smart home device re-accesses the network, the primary wireless access device may indicate, based on the mapping relationship in the specified connection information, only the target wireless access device corresponding to the smart home device to establish a network connection to the smart home device, and a wireless access device other than the target wireless access device does not establish a network connection to the smart home device. That a wireless access technology is Wi-Fi is used as an example. The primary wireless access device indicates the target wireless access device corresponding to the smart home device to respond to a Wi-Fi packet sent by the smart home device, and the wireless access device other than the target wireless access device does not respond to the Wi-Fi packet sent by the smart home device. Therefore, the smart home device can be guided to be connected to the target wireless access device, and the smart home device can be prevented from being connected to a wireless access device with a poor signal due to random connection. This can ensure network connection stability of the smart home device.

During specific implementation, specific manners in which the primary wireless access device generates the specified connection information may include the following two manners:

Manner 1: The primary wireless access device has a capability of generating specified connection information, and generates specified connection information in a manner of adding a single smart home device to access the network.

If the primary wireless access device has the capability of generating specified connection information, in a scenario in which the user adds a single smart home device to the network, after the smart home device establishes a network connection to a target wireless access device, the primary wireless access device may directly generate specified connection information corresponding to the smart home device. The specified connection information includes a mapping relationship between the single smart home device and the target wireless access device, so that the specified connection information of the single smart home device can be generated.

Manner 2: The primary wireless access device does not have a capability of generating specified connection information, and generates specified connection information in batches for a plurality of online smart home devices.

If the primary wireless access device does not have the capability of generating specified connection information, in a scenario in which the user adds a single smart home device to the network, after the smart home device establishes a network connection to a target wireless access device, the primary wireless access device does not directly generate specified connection information. Instead, after the user upgrades the primary wireless access device, and then the primary wireless access device has the capability of generating specified connection information, the primary wireless access device generates specified connection information for a plurality of smart home devices running on the network. For example, the specified connection information may be generated based on a connection relationship between the plurality of smart home devices and wireless access devices. In this way, the specified connection information of the plurality of smart home devices can be generated in batches. The specified connection information includes a mapping relationship between the plurality of smart home devices and target wireless access devices. For example, the user may perform an update operation on the primary wireless access device. The update operation may be a version upgrade of the primary wireless access device, so that the primary wireless access device can have the capability of generating specified connection information. In response to the detected operation of updating the primary wireless access device by the user, the specified connection information is generated based on a connection relationship between the smart home devices and the target wireless access devices. In other words, the primary wireless access device may detect which smart home devices have established network connections to wireless access devices, and may generate a mapping relationship between the smart home devices that have established the network connections to the target wireless access devices and the target wireless access devices corresponding to the smart home devices and store the mapping relationship.

In some optional embodiments, after the specified connection information is generated, the user may also manually modify the mapping relationship in the specified connection information on the third-party application. In this way, the mapping relationship between the smart home device and the target wireless access device can be adjusted, so that the smart home device and a wireless access device can better match each other. Therefore, when the smart home device re-accesses the network, a wireless access device with a good signal can be selected, and the network connection stability of the smart home device can be further improved.

In some optional embodiments, when the smart home device is disconnected from a network and re-accesses the network, the primary wireless access device may indicate, based on the specified connection information, the target wireless access device corresponding to the smart home device to re-establish a network connection to the smart home device. If the target wireless access device cannot establish a network connection to the smart home device due to a fault, signal deterioration, or the like, or the smart home device fails to establish a network connection to the target wireless access device, the primary wireless access device may indicate another wireless access device (for example, a wireless access device other than the target wireless access device in the one or more secondary wireless access devices) to establish a network connection to the smart home device, so that the smart home device can be connected to the another wireless access device. Therefore, disconnection of the smart home device can be avoided.

In some optional embodiments, when the smart home device is disconnected from a network and re-accesses the network, the primary wireless access device may indicate, based on the specified connection information, the target wireless access device corresponding to the smart home device to re-establish a network connection to the smart home device. If the primary wireless access device consecutively fails to indicate, for a plurality of times, the target wireless access device to establish a network connection to the smart home device, the primary wireless access device deletes the mapping relationship between the target wireless access device and the smart home device from the specified connection information. Further, the smart home device that consecutively fails to establish a network connection for a plurality of times may be marked as an uncontrolled product.

It may be understood that, in this embodiment of this application, networking is performed on a smart home device that does not have a route selection capability. As future smart home devices gradually have the route selection capability, hybrid networking may be performed on a smart home device that has the route selection capability and a smart home device that does not have the route selection capability, so that a network can be adapted to both the smart home device that has the route selection capability and the smart home device that does not have the route selection capability.

In this embodiment of this application, in a scenario in which the primary wireless access device does not directly provide a wireless access service, the secondary wireless access device may indicate the terminal device to measure the signal quality of the secondary wireless access device. In this way, the primary wireless access device can select, based on the signal quality of the secondary wireless access device, a secondary wireless access device with a good signal, and indicate the secondary wireless access device with the good signal to establish a network connection to the smart home device. This prevents the smart home device from being connected to a secondary wireless access device with a poor signal due to random connection, and helps improve the network connection stability of the smart home device.

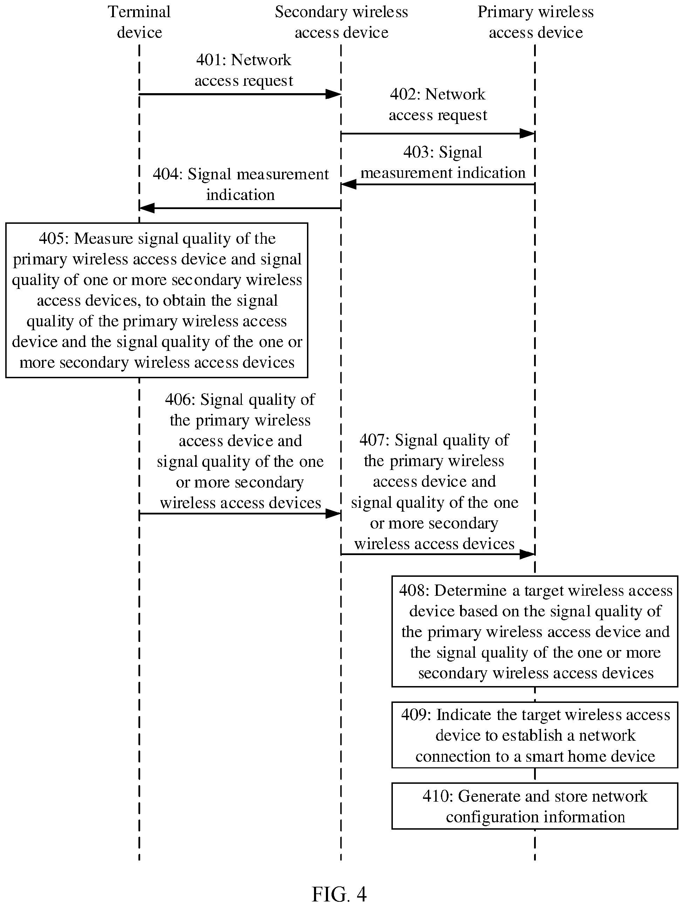

Next, the application scenario shown in FIG. 1b is used as an example to describe, with reference to FIG. 4, the network connection method provided in this application.

FIG. 4 is a schematic flowchart of another embodiment of a network connection method according to this application. In the embodiment shown in FIG. 4, a terminal device has established a network connection to a secondary wireless access device. The method specifically includes the following steps:

Step 401: In response to a detected operation of adding a smart home device to a network by a user, the terminal device sends a network access request to the secondary wireless access device that has established the network connection to the terminal device, to add the smart home device to the network. Correspondingly, the secondary wireless access device that has established the network connection to the terminal device receives the network access request sent by the terminal device.

Specifically, for a specific implementation of step 401, refer to related descriptions in the foregoing embodiment. Details are not described herein again.

Step 402: In response to the received network access request, the secondary wireless access device that has established the network connection to the terminal device sends the network access request to a primary wireless access device. Correspondingly, the primary wireless access device receives the network access request sent by the secondary wireless access device that has established the network connection to the terminal device.

Step 403: In response to the received network access request, the primary wireless access device sends a signal measurement indication to the secondary wireless access device that has established the network connection to the terminal device, to indicate the terminal device to measure signal quality of the primary wireless access device and one or more secondary wireless access devices. Correspondingly, the secondary wireless access device that has established the network connection to the terminal device receives the signal measurement indication sent by the primary wireless access device.

Specifically, in this embodiment of this application, the primary wireless access device has a capability of directly providing a wireless access service, in other words, the primary wireless access device may directly establish a network connection to the smart home device. Therefore, the terminal device may measure the signal quality of the primary wireless access device and signal quality of the one or more secondary wireless access devices, that is, the terminal device may measure both the signal quality of the primary wireless access device and the signal quality of the one or more secondary wireless access devices. In this way, the primary wireless access device may indicate the terminal device to measure the signal quality of the primary wireless access device and the signal quality of the one or more secondary wireless access devices.

Step 404: In response to the received signal measurement indication, the secondary wireless access device that has established the network connection to the terminal device sends the signal measurement indication to the terminal device. Correspondingly, the terminal device receives the signal measurement indication sent by the secondary wireless access device that has established the network connection to the terminal device.

Step 405: The terminal device measures the signal quality of the primary wireless access device and the signal quality of the one or more secondary wireless access devices based on the signal measurement indication, to obtain the signal quality of the primary wireless access device and the signal quality of the one or more secondary wireless access devices.

Specifically, after receiving the signal measurement indication, the terminal device may measure the signal quality of the surrounding primary wireless access device and one or more secondary wireless access devices, to obtain the signal quality of the primary wireless access device and the signal quality of the one or more secondary wireless access devices, and therefore may know current signal strength of the primary wireless access device and the secondary wireless access device. For a manner of measuring the signal quality of the primary wireless access device, specifically refer to the foregoing manner of measuring the signal quality of the secondary wireless access device. Details are not described herein again.

Step 406: The terminal device sends the signal quality of the primary wireless access device and the signal quality of the one or more secondary wireless access devices to the secondary wireless access device that has established the network connection to the terminal device. Correspondingly, the secondary wireless access device that has established the network connection to the terminal device receives the signal quality of the primary wireless access device and the signal quality of the one or more secondary wireless access devices that are sent by the terminal device.

Step 407: In response to the received signal quality of the primary wireless access device and the received signal quality of the one or more secondary wireless access devices that are sent by the terminal device, the secondary wireless access device that has established the network connection to the terminal device sends the signal quality of the primary wireless access device and the signal quality of the one or more secondary wireless access devices to the primary wireless access device. Correspondingly, the primary wireless access device receives the signal quality of the primary wireless access device and the signal quality of the one or more secondary wireless access devices that are sent by the secondary wireless access device that has established the network connection to the terminal device.

Step 408: The primary wireless access device determines a target wireless access device in the primary wireless access device and the one or more secondary wireless access devices based on the signal quality of the primary wireless access device and the signal quality of the one or more secondary wireless access devices.

Specifically, after receiving the signal quality of the primary wireless access device and the signal quality of the one or more secondary wireless access devices that are sent by the secondary wireless access device that has established the network connection to the terminal device, the primary wireless access device may select the target wireless access device from the primary wireless access device and the one or more secondary wireless access devices. The target wireless access device may be a wireless access device with highest signal quality in the primary wireless access device and the one or more secondary wireless access devices. Alternatively, the target wireless access device may be a wireless access device whose signal quality is greater than a preset threshold in the primary wireless access device and the one or more secondary wireless access devices. This is not specifically limited in this embodiment of this application.

Step 409: The primary wireless access device indicates the target wireless access device to establish a network connection to the smart home device.

Specifically, the target wireless access device may be the secondary wireless access device that has established the network connection to the terminal device. For example, the secondary wireless access device that has established the network connection to the terminal device is a wireless access device with highest or relatively high signal quality in the primary wireless access device and the one or more secondary wireless access devices. Alternatively, the target wireless access device may be the primary wireless access device. For example, the primary wireless access device is a wireless access device with highest or relatively high signal quality in the primary wireless access device and the one or more secondary wireless access devices. Alternatively, the target wireless access device may be a wireless access device other than the secondary wireless access device that has established the network connection to the terminal device in the one or more secondary wireless access devices. For example, the target wireless access device is a wireless access device with highest or relatively high signal quality in the primary wireless access device and the one or more secondary wireless access devices.

When the target wireless access device is the secondary wireless access device that has established the network connection to the terminal device, the primary wireless access device may send a connection indication to the secondary wireless access device that has established the network connection to the terminal device, to indicate the secondary wireless access device that has established the network connection to the terminal device to establish a network connection to the smart home device. When the target wireless access device is the primary wireless access device, the primary wireless access device may directly establish a network connection to the smart home device. When the target wireless access device is the wireless access device other than the secondary wireless access device that has established the network connection to the terminal device in secondary wireless access devices, the primary wireless access device may send a connection indication to the target wireless access device, to indicate the target wireless access device to establish a network connection to the smart home device.

In some optional embodiments, if the primary wireless access device indicates the secondary wireless access device that has established the network connection to the terminal device to establish a network connection to the smart home device, it indicates that signal quality of the secondary wireless access device that has established the network connection to the terminal device is the highest or relatively high in the primary wireless access device and the one or more secondary wireless access devices, and the secondary wireless access device that has established the network connection to the terminal device may further continue to maintain the network connection to the terminal device. Therefore, network connection stability of the terminal device can be maintained.

In some optional embodiments, if the primary wireless access device directly establishes a network connection to the smart home device, it indicates that the signal quality of the primary wireless access device is the highest or relatively high in the primary wireless access device and the one or more secondary wireless access devices. In this case, the primary wireless access device may further send a disconnection indication to the secondary wireless access device that has established the network connection to the terminal device, to indicate the secondary wireless access device that has established the network connection to the terminal device to disconnect the network connection to the terminal device; and establish the network connection to the terminal device. Therefore, network connection stability of the terminal device can be improved.

In some optional embodiments, if the primary wireless access device indicates the target wireless access device to establish a network connection to the smart home device, and the target wireless access device is the wireless access device other than the secondary wireless access device that has established the network connection to the terminal device in the one or more secondary wireless access devices, it indicates that signal quality of the target wireless access device is the highest or relatively high in the primary wireless access device and the one or more secondary wireless access devices. In this case, the primary wireless access device may further send a disconnection indication to the secondary wireless access device that has established the network connection to the terminal device, to indicate the secondary wireless access device that has established the network connection to the terminal device to disconnect the network connection to the terminal device; and may indicate the target wireless access device to establish a network connection to the terminal device. Therefore, network connection stability of the terminal device can be improved.

Step 410: The primary wireless access device generates and stores specified connection information, where the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

Specifically, for a specific implementation of step 410, refer to related descriptions in the foregoing embodiment. Details are not described herein again.

In this embodiment of this application, in a scenario in which the primary wireless access device directly provides a wireless access service, the secondary wireless access device may indicate the terminal device to measure the signal quality of the primary wireless access device and the secondary wireless access device. In this way, the primary wireless access device can select, based on the signal quality of the primary wireless access device and the secondary wireless access device, a wireless access device with a good signal, and indicate the wireless access device with the good signal to establish a network connection to the smart home device. This prevents the smart home device from being connected to a wireless access device with a poor signal due to random connection, and helps improve network connection stability of the smart home device.

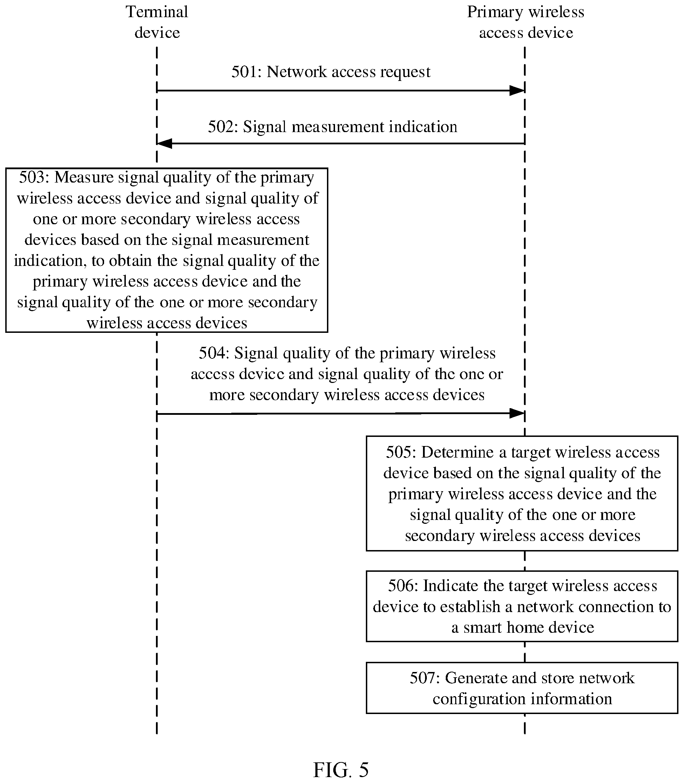

Next, the application scenario shown in FIG. 1b is still used as an example to describe, with reference to FIG. 5, the network connection method provided in this application.

FIG. 5 is a schematic flowchart of another embodiment of a network connection method according to this application. In the embodiment shown in FIG. 5, a terminal device has established a network connection to a primary wireless access device. The method specifically includes the following steps:
Step 501: The terminal device sends a network access request to the primary wireless access device in response to a detected operation of adding a smart home device to a network by a user, to add the smart home device to the network. Correspondingly, the primary wireless access device receives the network access request sent by the terminal device.

Specifically, for a specific implementation of step 501, refer to related descriptions in the foregoing embodiment. Details are not described herein again.

Step 502: In response to the received network access request, the primary wireless access device sends a signal measurement indication to the terminal device, to indicate the terminal device to measure signal quality of the primary wireless access device and one or more secondary wireless access devices. Correspondingly, the terminal device receives the signal measurement indication sent by the primary wireless access device.

Step 503: The terminal device measures the signal quality of the primary wireless access device and the signal quality of the one or more secondary wireless access devices based on the signal measurement indication, to obtain the signal quality of the primary wireless access device and the signal quality of the one or more secondary wireless access devices.

Specifically, for a specific implementation of step 503, refer to related descriptions in the foregoing embodiment. Details are not described herein again.

Step 504: The terminal device sends the signal quality of the primary wireless access device and the signal quality of the one or more secondary wireless access devices to the primary wireless access device. Correspondingly, the primary wireless access device receives the signal quality of the primary wireless access device and the signal quality of the one or more secondary wireless access devices that are sent by the terminal device.

Step 505: The primary wireless access device determines a target wireless access device in the primary wireless access device and the one or more secondary wireless access devices based on the signal quality of the primary wireless access device and the signal quality of the one or more secondary wireless access devices.

Specifically, for a specific implementation of step 505, refer to related descriptions in the foregoing embodiment. Details are not described herein again.

Step 506: The primary wireless access device indicates the target wireless access device to establish a network connection to the smart home device.

Specifically, the target wireless access device may be the primary wireless access device. For example, the primary wireless access device is a wireless access device with highest or relatively high signal quality in the primary wireless access device and the one or more secondary wireless access devices. Alternatively, the target wireless access device may be any wireless access device in the secondary wireless access device. For example, the target wireless access device is a wireless access device with highest or relatively high signal quality in the primary wireless access device and the one or more secondary wireless access devices.

When the target wireless access device is the primary wireless access device, the primary wireless access device may directly establish a network connection to the smart home device. When the target wireless access device is any wireless access device in the secondary wireless access device, the primary wireless access device may send a connection indication to the target wireless access device, to indicate the target wireless access device to establish a network connection to the smart home device.

In some optional embodiments, if the primary wireless access device directly establishes a network connection to the smart home device, it indicates that the signal quality of the primary wireless access device is the highest or relatively high in the primary wireless access device and the one or more secondary wireless access devices. In this case, the primary wireless access device may further maintain the network connection to the terminal device. Therefore, network connection stability of the terminal device can be maintained.

In some optional embodiments, if the primary wireless access device indicates the target wireless access device to establish a network connection to the smart home device, and the target wireless access device is any wireless access device in the one or more secondary wireless access devices, it indicates that signal quality of the target wireless access device is the highest or relatively high in the primary wireless access device and the one or more secondary wireless access devices. In this case, the primary wireless access device may further disconnect the network connection to the terminal device, and may indicate the target wireless access device to establish a network connection to the terminal device. Therefore, network connection stability of the terminal device can be improved.

Step 507: The primary wireless access device generates and stores specified connection information, where the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

Specifically, for a specific implementation of step 507, refer to related descriptions in the foregoing embodiment. Details are not described herein again.

In this embodiment of this application, in a scenario in which the primary wireless access device directly provides a wireless access service, the secondary wireless access device may indicate the terminal device to measure the signal quality of the primary wireless access device and the secondary wireless access device. In this way, the primary wireless access device can select, based on the signal quality of the primary wireless access device and the secondary wireless access device, a wireless access device with a good signal, and indicate the wireless access device with the good signal to establish a network connection to the smart home device. This prevents the smart home device from being connected to a wireless access device with a poor signal due to random connection, and helps improve network connection stability of the smart home device.

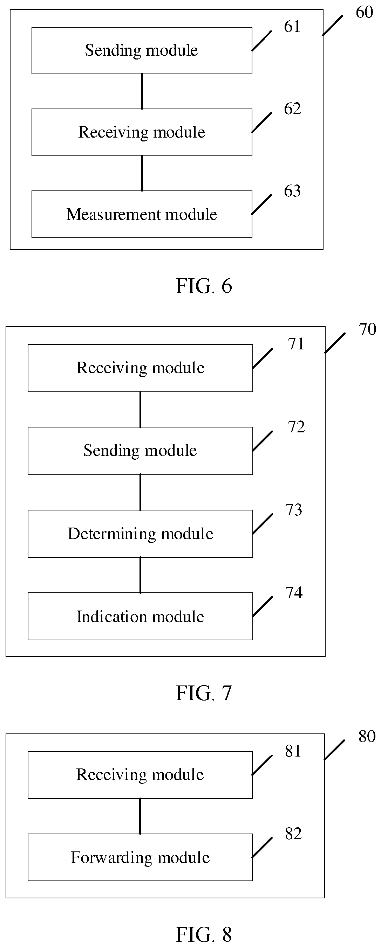

FIG. 6 is a diagram of an embodiment of a structure of a network connection apparatus according to this application. As shown in FIG. 6, the network connection apparatus 60 is used in a terminal device, and may include a sending module 61, a receiving module 62, and a measurement module 63.

The sending module 61 is configured to send a network access request in response to a detected operation of adding a smart home device to a network by a user, to add the smart home device to the network.

The receiving module 62 is configured to receive a signal measurement indication.

The measurement module 63 is configured to measure signal quality of at least one wireless access device based on the signal measurement indication, to obtain the signal quality of the at least one wireless access device.

The sending module 61 is further configured to: after the signal quality of the at least one wireless access device is obtained, send the signal quality of the at least one wireless access device, where the signal quality of the at least one wireless access device is used to determine a target wireless access device in the at least one wireless access device, and the target wireless access device is configured to establish a network connection to the smart home device.

In a possible implementation, the at least one wireless access device includes one primary wireless access device and one or more secondary wireless access devices, the primary wireless access device is configured to manage and control the one or more secondary wireless access devices, and the terminal device has established a network connection to one of the one or more secondary wireless access devices. The sending module 61 is specifically configured to send the network access request to the secondary wireless access device that has established the network connection to the terminal device, so that the secondary wireless access device that has established the network connection to the terminal device sends the network access request to the primary wireless access device after receiving the network access request.

The receiving module 62 is specifically configured to receive the signal measurement indication sent by the secondary wireless access device that has established the network connection to the terminal device, where the signal measurement indication is sent by the primary wireless access device to the secondary wireless access device that has established the network connection to the terminal device.

The measurement module 63 is specifically configured to measure signal quality of the primary wireless access device and signal quality of the one or more secondary wireless access devices based on the signal measurement indication, to obtain the signal quality of the primary wireless access device and the signal quality of the one or more secondary wireless access devices.

The sending module 61 is further configured to: after the signal quality of the primary wireless access device and the signal quality of the one or more secondary wireless access devices are obtained, send the signal quality of the primary wireless access device and the signal quality of the one or more secondary wireless access devices to the secondary wireless access device that has established the network connection to the terminal device, so that the secondary wireless access device that has established the network connection to the terminal device sends the signal quality of the primary wireless access device and the signal quality of the one or more secondary wireless access devices to the primary wireless access device after receiving the signal quality of the primary wireless access device and the signal quality of the one or more secondary wireless access devices.

In a possible implementation, the network connection apparatus 60 further includes:
a connection module, configured to maintain the network connection to the secondary wireless access device that has established the network connection to the terminal device.

In a possible implementation, the connection module is further configured to: disconnect the network connection to the secondary wireless access device that has established the network connection to the terminal device, and establish a network connection to the target wireless access device.

In a possible implementation, the at least one wireless access device includes one or more secondary wireless access devices, and the terminal device has established a network connection to one of the one or more secondary wireless access devices. The sending module 61 is specifically configured to send the network access request to the secondary wireless access device that has established the network connection to the terminal device, so that the secondary wireless access device that has established the network connection to the terminal device sends the network access request to a primary wireless access device after receiving the network access request, where the primary wireless access device is configured to manage and control the one or more secondary wireless access devices.

The receiving module 62 is specifically configured to receive the signal measurement indication sent by the secondary wireless access device that has established the network connection to the terminal device, where the signal measurement indication is sent by the primary wireless access device to the secondary wireless access device that has established the network connection to the terminal device.

The measurement module 62 is specifically configured to measure signal quality of the one or more secondary wireless access devices based on the signal measurement indication, to obtain the signal quality of the one or more secondary wireless access devices.

The sending module 61 is further configured to: after the signal quality of the one or more secondary wireless access devices is obtained, send the signal quality of the one or more secondary wireless access devices to the secondary wireless access device that has established the network connection to the terminal device, so that the secondary wireless access device that has established the network connection to the terminal device sends the signal quality of the one or more secondary wireless access devices to the primary wireless access device after receiving the signal quality of the one or more secondary wireless access devices.

In a possible implementation, the at least one wireless access device includes one primary wireless access device and one or more secondary wireless access devices, the primary wireless access device is configured to manage and control the one or more secondary wireless access devices, and the terminal device has established a network connection to the primary wireless access device. The sending module 61 is specifically configured to send the network access request to the primary wireless access device.

The receiving module 62 is specifically configured to receive the signal measurement indication sent by the primary wireless access device.

The measurement module 63 is specifically configured to measure signal quality of the primary wireless access device and signal quality of the one or more secondary wireless access devices based on the signal measurement indication, to obtain the signal quality of the primary wireless access device and the signal quality of the one or more secondary wireless access devices.

The sending module 61 is further configured to: after the signal quality of the primary wireless access device and the signal quality of the one or more secondary wireless access devices are obtained, send the signal quality of the primary wireless access device and the signal quality of the one or more secondary wireless access devices to the primary wireless access device.

In a possible implementation, the connection module is further configured to maintain the network connection to the primary wireless access device.

In a possible implementation, the connection module is further configured to: disconnect the network connection to the primary wireless access device, and establish a network connection to the target wireless access device.

In a possible implementation, the target wireless access device is a wireless access device with highest signal quality in the at least one wireless access device.

FIG. 7 is a diagram of another embodiment of a structure of a network connection apparatus according to this application. As shown in FIG. 7, the network connection apparatus 70 is used in a primary wireless access device, and may include a receiving module 71, a sending module 72, a determining module 73, and an indication module 74.

The receiving module 71 is configured to receive a network access request, where the network access request is used to add a smart home device to a network.

The sending module 72 is configured to send a signal measurement indication, where the signal measurement indication indicates a terminal device to measure signal quality of at least one wireless access device.

The receiving module 71 is further configured to receive the signal quality of the at least one wireless access device after the signal measurement indication is sent.

The determining module 73 is configured to determine a target wireless access device in the at least one wireless access device based on the signal quality of the at least one wireless access device.

The indication module 74 is configured to indicate the target wireless access device to establish a network connection to the smart home device.

In a possible implementation, the at least one wireless access device includes the primary wireless access device and one or more secondary wireless access devices, the primary wireless access device is configured to manage and control the one or more secondary wireless access devices, and the terminal device has established a network connection to one of the one or more secondary wireless access devices. The receiving module 71 is specifically configured to receive the network access request sent by the secondary wireless access device that has established the network connection to the terminal device, where the network access request is sent by the terminal device to the secondary wireless access device that has established the network connection to the terminal device.

The sending module 72 is specifically configured to send the signal measurement indication to the secondary wireless access device that has established the network connection to the terminal device, so that the secondary wireless access device that has established the network connection to the terminal device sends the signal measurement indication to the terminal device after receiving the signal measurement indication, where the signal measurement indication indicates the terminal device to measure signal quality of the primary wireless access device and signal quality of the one or more secondary wireless access devices.

The receiving module 71 is further configured to: after the signal measurement indication is sent to the secondary wireless access device that has established the network connection to the terminal device, receive the signal quality of the primary wireless access device and the signal quality of the one or more secondary wireless access devices that are sent by the secondary wireless access device that has established the network connection to the terminal device, where the signal quality of the primary wireless access device and the signal quality of the one or more secondary wireless access devices are sent by the terminal device to the secondary wireless access device that has established the network connection to the terminal device.

The determining module 73 is specifically configured to determine the target wireless access device in the primary wireless access device and the one or more secondary wireless access devices based on the signal quality of the primary wireless access device and the signal quality of the one or more secondary wireless access devices.

In a possible implementation, the indication module 74 is further configured to indicate the secondary wireless access device that has established the network connection to the terminal device to maintain the network connection to the terminal device, where the target wireless access device is the secondary wireless access device that has established the network connection to the terminal device.

In a possible implementation, the indication module 74 is further configured to: indicate the secondary wireless access device that has established the network connection to the terminal device to disconnect the network connection to the terminal device, and indicate the target wireless access device to establish a network connection to the terminal device.

In a possible implementation, the at least one wireless access device includes one or more secondary wireless access devices, the primary wireless access device is configured to manage and control the one or more secondary wireless access devices, and the terminal device has established a network connection to one of the one or more secondary wireless access devices. The receiving module 71 is specifically configured to receive the network access request sent by the secondary wireless access device that has established the network connection to the terminal device, where the network access request is sent by the terminal device to the secondary wireless access device that has established the network connection to the terminal device.

The sending module 72 is specifically configured to send the signal measurement indication to the secondary wireless access device that has established the network connection to the terminal device, so that the secondary wireless access device that has established the network connection to the terminal device sends the signal measurement indication to the terminal device after receiving the signal measurement indication, where the signal measurement indication indicates the terminal device to measure signal quality of the one or more secondary wireless access devices.

The receiving module 71 is further configured to: after the signal measurement indication is sent to the secondary wireless access device that has established the network connection to the terminal device, receive the signal quality of the one or more secondary wireless access devices that is sent by the secondary wireless access device that has established the network connection to the terminal device, where the signal quality of the one or more secondary wireless access devices is sent by the terminal device to the secondary wireless access device that has established the network connection to the terminal device.

The determining module 73 is specifically configured to determine the target wireless access device in the one or more secondary wireless access devices based on the signal quality of the one or more secondary wireless access devices.

In a possible implementation, the indication module 74 is further configured to indicate the secondary wireless access device that has established the network connection to the terminal device to maintain the network connection to the terminal device, where the target wireless access device is the secondary wireless access device that has established the network connection to the terminal device.

In a possible implementation, the indication module 74 is further configured to: indicate the secondary wireless access device that has established the network connection to the terminal device to disconnect the network connection to the terminal device, and indicate the target wireless access device to establish a network connection to the terminal device.

In a possible implementation, the at least one wireless access device includes the primary wireless access device and one or more secondary wireless access devices, the primary wireless access device is configured to manage and control the one or more secondary wireless access devices, and the primary wireless access device has established a network connection to the terminal device. The receiving module 71 is specifically configured to receive the network access request sent by the terminal device.

The sending module 72 is specifically configured to send the signal measurement indication to the terminal device, where the signal measurement indication indicates the terminal device to measure signal quality of the primary wireless access device and signal quality of the one or more secondary wireless access devices.

The receiving module 71 is further configured to: after the signal measurement indication is sent to the terminal device, receive the signal quality of the primary wireless access device and the signal quality of the one or more secondary wireless access devices that are sent by the terminal device.

The determining module 73 is specifically configured to determine the target wireless access device in the primary wireless access device and the one or more secondary wireless access devices based on the signal quality of the primary wireless access device and the signal quality of the one or more secondary wireless access devices.

In a possible implementation, the network connection apparatus 70 further includes:
a connection module, configured to maintain the network connection to the terminal device, where the target wireless access device is the primary wireless access device.

In a possible implementation, the connection module is further configured to: disconnect the network connection to the terminal device, and indicate the target wireless access device to establish a network connection to the terminal device.

In a possible implementation, the target wireless access device is a wireless access device with highest signal quality in the primary wireless access device and the one or more secondary wireless access devices.

In a possible implementation, the network connection apparatus 70 further includes:
a generation module, configured to generate and store specified connection information, where the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

In a possible implementation, the generation module is specifically configured to generate the specified connection information based on a current network connection relationship in response to a detected operation of updating the primary wireless access device by a user, where the network connection relationship is used to represent that a network connection relationship has been established between a wireless access device and a smart home device.

In a possible implementation, the indication module 74 is further configured to: if failing to indicate, based on the specified connection information, the target wireless access device to establish a network connection to the smart home device, indicate another wireless access device to establish a network connection to the smart home device, where the another wireless access device is a wireless access device other than the target wireless access device in the at least one wireless access device.

In a possible implementation, the network connection apparatus 70 further includes:
a deletion module, configured to: if the indication module consecutively fails to indicate, for a plurality of times based on the specified connection information, the target wireless access device to establish a network connection to the smart home device, delete the mapping relationship between the target wireless access device and the smart home device from the specified connection information.

FIG. 8 is a diagram of still another embodiment of a structure of a network connection apparatus according to this application. As shown in FIG. 8, the network connection apparatus 80 is used in a secondary wireless access device, the secondary wireless access device has established a network connection to a terminal device, and the network connection apparatus 80 may include a receiving module 81 and a forwarding module 82.

The receiving module 81 is configured to receive a network access request sent by the terminal device, where the network access request is used to add a smart home device to a network.

The forwarding module 82 is configured to send the network access request to a primary wireless access device, where the primary wireless access device is configured to manage and control one or more secondary wireless access devices.

The receiving module 81 is further configured to: after the network access request is sent to the primary wireless access device, receive a signal measurement indication sent by the primary wireless access device, where the signal measurement indication indicates the terminal device to measure signal quality of at least one wireless access device.

The forwarding module 82 is further configured to: after the signal measurement indication sent by the primary wireless access device is received, send the signal measurement indication to the terminal device.

The receiving module 81 is further configured to: after the signal measurement indication is sent to the terminal device, receive the signal quality of the at least one wireless access device that is sent by the terminal device.

The forwarding module 82 is further configured to: after the signal quality of the at least one wireless access device that is sent by the terminal device is received, send the signal quality of the at least one wireless access device to the primary wireless access device, so that the primary wireless access device determines a target access device in the at least one wireless access device based on the signal quality of the at least one wireless access device, where the target wireless access device is configured to establish a network connection to the smart home device.

In a possible implementation, the signal measurement indication indicates the terminal device to measure signal quality of the primary wireless access device and signal quality of the one or more secondary wireless access devices.

The receiving module 81 is further configured to: after the signal measurement indication is sent to the terminal device, receive the signal quality of the primary wireless access device and the signal quality of the one or more secondary wireless access devices that are sent by the terminal device.

The forwarding module 82 is further configured to: after the signal quality of the primary wireless access device and the signal quality of the one or more secondary wireless access devices that are sent by the terminal device are received, send the signal quality of the primary wireless access device and the signal quality of the one or more secondary wireless access devices to the primary wireless access device, so that the primary wireless access device determines the target access device in the primary wireless access device and the one or more secondary wireless access devices based on the signal quality of the primary wireless access device and the signal quality of the one or more secondary wireless access devices.

In a possible implementation, the signal measurement indication indicates the terminal device to measure signal quality of the one or more secondary wireless access devices.

The receiving module 81 is further configured to: after the signal measurement indication is sent to the terminal device, receive the signal quality of the one or more secondary wireless access devices that is sent by the terminal device.

The forwarding module 82 is further configured to: after the signal quality of the one or more secondary wireless access devices that is sent by the terminal device is received, send the signal quality of the one or more secondary wireless access devices to the primary wireless access device, so that the primary wireless access device determines the target access device in the one or more secondary wireless access devices based on the signal quality of the one or more secondary wireless access devices.

In a possible implementation, the network connection apparatus 80 further includes:
a connection module, configured to: receive a connection indication sent by the primary wireless access device; and establish a network connection to the smart home device based on the connection indication.

In a possible implementation, the connection module is further configured to maintain the network connection to the terminal device.

In a possible implementation, the connection module is further configured to: receive a disconnection indication sent by the primary wireless access device; and disconnect the network connection to the terminal device based on the disconnection indication.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, for example, a flash memory, a removable hard disk, a read-only memory, a random access memory, a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A network connection method, applied to a terminal device, wherein the method comprises:
sending a network access request in response to a detected operation of adding a smart home device to a network by a user, wherein the network access request is used to add the smart home device to the network;
receiving a signal measurement indication;
measuring signal quality of at least one wireless access device based on the signal measurement indication, to obtain the signal quality of the at least one wireless access device; and
sending the signal quality of the at least one wireless access device, wherein the signal quality of the at least one wireless access device is used to determine a target wireless access device in the at least one wireless access device, and the target wireless access device is configured to establish a network connection to the smart home device.

2. The method according to claim 1, wherein the at least one wireless access device comprises one primary wireless access device and one or more secondary wireless access devices, the primary wireless access device is configured to manage and control the one or more secondary wireless access devices, and the terminal device has established a network connection to one of the one or more secondary wireless access devices; and the sending a network access request specifically comprises:
sending the network access request to the secondary wireless access device that has established the network connection to the terminal device, so that the secondary wireless access device that has established the network connection to the terminal device sends the network access request to the primary wireless access device after receiving the network access request;
the receiving a signal measurement indication specifically comprises:
receiving the signal measurement indication sent by the secondary wireless access device that has established the network connection to the terminal device, wherein the signal measurement indication is sent by the primary wireless access device to the secondary wireless access device that has established the network connection to the terminal device;
the measuring signal quality of at least one wireless access device based on the signal measurement indication, to obtain the signal quality of the at least one wireless access device specifically comprises:
measuring signal quality of the primary wireless access device and signal quality of the one or more secondary wireless access devices based on the signal measurement indication, to obtain the signal quality of the primary wireless access device and the signal quality of the one or more secondary wireless access devices; and
the sending the signal quality of the at least one wireless access device specifically comprises: sending the signal quality of the primary wireless access device and the signal quality of the one or more secondary wireless access devices to the secondary wireless access device that has established the network connection to the terminal device, so that the secondary wireless access device that has established the network connection to the terminal device sends the signal quality of the primary wireless access device and the signal quality of the one or more secondary wireless access devices to the primary wireless access device after receiving the signal quality of the primary wireless access device and the signal quality of the one or more secondary wireless access devices.

3. The method according to claim 1, wherein the at least one wireless access device comprises one or more secondary wireless access devices, and the terminal device has established a network connection to one of the one or more secondary wireless access devices; and the sending a network access request specifically comprises:
sending the network access request to the secondary wireless access device that has established the network connection to the terminal device, so that the secondary wireless access device that has established the network connection to the terminal device sends the network access request to a primary wireless access device after receiving the network access request, wherein the primary wireless access device is configured to manage and control the one or more secondary wireless access devices;
the receiving a signal measurement indication specifically comprises:
receiving the signal measurement indication sent by the secondary wireless access device that has established the network connection to the terminal device, wherein the signal measurement indication is sent by the primary wireless access device to the secondary wireless access device that has established the network connection to the terminal device;
the measuring signal quality of at least one wireless access device based on the signal measurement indication, to obtain the signal quality of the at least one wireless access device specifically comprises:
measuring signal quality of the one or more secondary wireless access devices based on the signal measurement indication, to obtain the signal quality of the one or more secondary wireless access devices; and
the sending the signal quality of the at least one wireless access device specifically comprises:
sending the signal quality of the one or more secondary wireless access devices to the secondary wireless access device that has established the network connection to the terminal device, so that the secondary wireless access device that has established the network connection to the terminal device sends the signal quality of the one or more secondary wireless access devices to the primary wireless access device after receiving the signal quality of the one or more secondary wireless access devices.

4. The method according to claim 1, wherein the at least one wireless access device comprises one primary wireless access device and one or more secondary wireless access devices, the primary wireless access device is configured to manage and control the one or more secondary wireless access devices, and the terminal device has established a network connection to the primary wireless access device; and the sending a network access request specifically comprises:
sending the network access request to the primary wireless access device;
the receiving a signal measurement indication specifically comprises:
receiving the signal measurement indication sent by the primary wireless access device;
the measuring signal quality of at least one wireless access device based on the signal measurement indication, to obtain the signal quality of the at least one wireless access device specifically comprises:
measuring signal quality of the primary wireless access device and signal quality of the one or more secondary wireless access devices based on the signal measurement indication, to obtain the signal quality of the primary wireless access device and the signal quality of the one or more secondary wireless access devices; and
the sending the signal quality of the at least one wireless access device specifically comprises:
sending the signal quality of the primary wireless access device and the signal quality of the one or more secondary wireless access devices to the primary wireless access device.

5. A network connection method, applied to a primary wireless access device, wherein the method comprises:
receiving a network access request, wherein the network access request is used to add a smart home device to a network;
sending a signal measurement indication, wherein the signal measurement indication indicates a terminal device to measure signal quality of at least one wireless access device;
receiving the signal quality of the at least one wireless access device;
determining a target wireless access device in the at least one wireless access device based on the signal quality of the at least one wireless access device; and
indicating the target wireless access device to establish a network connection to the smart home device.

6. The method according to claim 5, wherein the at least one wireless access device comprises the primary wireless access device and one or more secondary wireless access devices, the primary wireless access device is configured to manage and control the one or more secondary wireless access devices, and the terminal device has established a network connection to one of the one or more secondary wireless access devices; and the receiving a network access request specifically comprises:
receiving the network access request sent by the secondary wireless access device that has established the network connection to the terminal device, wherein the network access request is sent by the terminal device to the secondary wireless access device that has established the network connection to the terminal device;
the sending a signal measurement indication specifically comprises:
sending the signal measurement indication to the secondary wireless access device that has established the network connection to the terminal device, so that the secondary wireless access device that has established the network connection to the terminal device sends the signal measurement indication to the terminal device after receiving the signal measurement indication, wherein the signal measurement indication indicates the terminal device to measure signal quality of the primary wireless access device and signal quality of the one or more secondary wireless access devices;
the receiving the signal quality of the at least one wireless access device specifically comprises:
receiving the signal quality of the primary wireless access device and the signal quality of the one or more secondary wireless access devices that are sent by the secondary wireless access device that has established the network connection to the terminal device, wherein the signal quality of the primary wireless access device and the signal quality of the one or more secondary wireless access devices are sent by the terminal device to the secondary wireless access device that has established the network connection to the terminal device; and
the determining a target wireless access device in the at least one wireless access device based on the signal quality of the at least one wireless access device specifically comprises:
determining the target wireless access device in the primary wireless access device and the one or more secondary wireless access devices based on the signal quality of the primary wireless access device and the signal quality of the one or more secondary wireless access devices.

7. The method according to claim 5, wherein the at least one wireless access device comprises one or more secondary wireless access devices, the primary wireless access device is configured to manage and control the one or more secondary wireless access devices, and the terminal device has established a network connection to one of the one or more secondary wireless access devices; and the receiving a network access request specifically comprises:
receiving the network access request sent by the secondary wireless access device that has established the network connection to the terminal device, wherein the network access request is sent by the terminal device to the secondary wireless access device that has established the network connection to the terminal device;
the sending a signal measurement indication specifically comprises:
sending the signal measurement indication to the secondary wireless access device that has established the network connection to the terminal device, so that the secondary wireless access device that has established the network connection to the terminal device sends the signal measurement indication to the terminal device after receiving the signal measurement indication, wherein the signal measurement indication indicates the terminal device to measure signal quality of the one or more secondary wireless access devices;
the receiving the signal quality of the at least one wireless access device specifically comprises:
receiving the signal quality of the one or more secondary wireless access devices that is sent by the secondary wireless access device that has established the network connection to the terminal device, wherein the signal quality of the one or more secondary wireless access devices is sent by the terminal device to the secondary wireless access device that has established the network connection to the terminal device; and
the determining a target wireless access device in the at least one wireless access device based on the signal quality of the at least one wireless access device specifically comprises:
determining the target wireless access device in the one or more secondary wireless access devices based on the signal quality of the one or more secondary wireless access devices.

8. The method according to claim 5, wherein the at least one wireless access device comprises the primary wireless access device and one or more secondary wireless access devices, the primary wireless access device is configured to manage and control the one or more secondary wireless access devices, and the primary wireless access device has established a network connection to the terminal device; and the receiving a network access request specifically comprises:
receiving the network access request sent by the terminal device;
the sending a signal measurement indication specifically comprises:
sending the signal measurement indication to the terminal device, wherein the signal measurement indication indicates the terminal device to measure signal quality of the primary wireless access device and signal quality of the one or more secondary wireless access devices;
the receiving the signal quality of the at least one wireless access device specifically comprises:
receiving the signal quality of the primary wireless access device and the signal quality of the one or more secondary wireless access devices that are sent by the terminal device; and
the determining a target wireless access device in the at least one wireless access device based on the signal quality of the at least one wireless access device specifically comprises:
determining the target wireless access device in the primary wireless access device and the one or more secondary wireless access devices based on the signal quality of the primary wireless access device and the signal quality of the one or more secondary wireless access devices.

9. The method according to any one of claims 5 to 8, wherein after the indicating the target wireless access device to establish a network connection to the smart home device, the method further comprises:
generating and storing specified connection information, wherein the specified connection information is used to represent a mapping relationship between the target wireless access device and the smart home device, and the specified connection information is used by the primary wireless access device to indicate, based on the specified connection information when the smart home device is disconnected from a network and re-accesses the network, the target wireless access device to re-establish a network connection to the smart home device.

10. The method according to claim 9, wherein the generating specified connection information specifically comprises:
generating the specified connection information based on a current network connection relationship in response to a detected operation of updating the primary wireless access device by a user, wherein the network connection relationship is used to represent that a network connection has been established between a wireless access device and a smart home device.

11. The method according to claim 9, wherein after the generating and storing specified connection information, the method further comprises:
if failing to indicate, based on the specified connection information, the target wireless access device to establish a network connection to the smart home device, indicating another wireless access device to establish a network connection to the smart home device, wherein the another wireless access device is a wireless access device other than the target wireless access device in the at least one wireless access device.

12. The method according to claim 9, wherein after the generating and storing specified connection information, the method further comprises:
if consecutively failing to indicate, for a plurality of times based on the specified connection information, the target wireless access device to establish a network connection to the smart home device, deleting the mapping relationship between the target wireless access device and the smart home device from the specified connection information.

13. A network connection method, applied to a secondary wireless access device, wherein the secondary wireless access device has established a network connection to a terminal device, and the method comprises:
receiving a network access request sent by the terminal device, wherein the network access request is used to add a smart home device to a network;
sending the network access request to a primary wireless access device, wherein the primary wireless access device is configured to manage and control one or more secondary wireless access devices;
receiving a signal measurement indication sent by the primary wireless access device, wherein the signal measurement indication indicates the terminal device to measure signal quality of at least one wireless access device;
sending the signal measurement indication to the terminal device;
receiving the signal quality of the at least one wireless access device that is sent by the terminal device; and
sending the signal quality of the at least one wireless access device to the primary wireless access device, so that the primary wireless access device determines a target access device in the at least one wireless access device based on the signal quality of the at least one wireless access device, wherein the target wireless access device is configured to establish a network connection to the smart home device.

14. The method according to claim 13, wherein the signal measurement indication indicates the terminal device to measure signal quality of the primary wireless access device and signal quality of the one or more secondary wireless access devices;
the receiving the signal quality of the at least one wireless access device that is sent by the terminal device specifically comprises:
receiving the signal quality of the primary wireless access device and the signal quality of the one or more secondary wireless access devices that are sent by the terminal device; and
the sending the signal quality of the at least one wireless access device to the primary wireless access device, so that the primary wireless access device determines a target access device in the at least one wireless access device based on the signal quality of the at least one wireless access device specifically comprises:
sending the signal quality of the primary wireless access device and the signal quality of the one or more secondary wireless access devices to the primary wireless access device, so that the primary wireless access device determines the target access device in the primary wireless access device and the one or more secondary wireless access devices based on the signal quality of the primary wireless access device and the signal quality of the one or more secondary wireless access devices.

15. The method according to claim 13, wherein the signal measurement indication indicates the terminal device to measure signal quality of the one or more secondary wireless access devices;
the receiving the signal quality of the at least one wireless access device that is sent by the terminal device specifically comprises:
receiving the signal quality of the one or more secondary wireless access devices that is sent by the terminal device; and
the sending the signal quality of the at least one wireless access device to the primary wireless access device, so that the primary wireless access device determines a target access device in the at least one wireless access device based on the signal quality of the at least one wireless access device specifically comprises:
sending the signal quality of the one or more secondary wireless access devices to the primary wireless access device, so that the primary wireless access device determines the target access device in the one or more secondary wireless access devices based on the signal quality of the one or more secondary wireless access devices.

16. The method according to any one of claims 13 to 15, wherein the method further comprises:
receiving a connection indication sent by the primary wireless access device; and
establishing a network connection to the smart home device based on the connection indication.

17. A terminal device, comprising a processor and a memory, wherein the memory is configured to store a computer program; and the processor is configured to run the computer program, to enable the terminal device to implement the network connection method according to any one of claims 1 to 4.

18. A primary wireless access device, comprising a processor and a memory, wherein the memory is configured to store a computer program; and the processor is configured to run the computer program, to enable the primary wireless access device to implement the network connection method according to any one of claims 5 to 12.

19. A secondary wireless access device, comprising a processor and a memory, wherein the memory is configured to store a computer program; and the processor is configured to run the computer program, to enable the secondary wireless access device to implement the network connection method according to any one of claims 13 to 16.

20. A communication system, comprising a terminal device, a primary wireless access device, one or more secondary wireless access devices, and a smart home device, wherein the primary wireless access device is configured to manage and control the one or more secondary wireless access devices;
the terminal device is configured to: in response to a detected operation of adding the smart home device to a network by a user, send a network access request to a secondary wireless access device that has established a network connection to the terminal device; receive a signal measurement indication sent by the secondary wireless access device that has established the network connection to the terminal device; measure signal quality of at least one wireless access device based on the signal measurement indication; and send the signal quality of the at least one wireless access device to the secondary wireless access device that has established the network connection to the terminal device; and
the primary wireless access device is configured to: receive the network access request sent by the secondary wireless access device that has established the network connection to the terminal device; send the signal measurement indication to the secondary wireless access device that has established the network connection to the terminal device; receive the signal quality of the at least one wireless access device that is sent by the secondary wireless access device that has established the network connection to the terminal device; determine a target wireless access device in the at least one wireless access device based on the signal quality of the at least one wireless access device; and indicate the target wireless access device to establish a network connection to the smart home device.

21. A communication system, comprising a terminal device, a primary wireless access device, one or more secondary wireless access devices, and a smart home device, wherein the primary wireless access device is configured to manage and control the one or more secondary wireless access devices;
the terminal device is configured to: send a network access request to the primary wireless access device in response to a detected operation of adding the smart home device to a network by a user; receive a signal measurement indication sent by the primary wireless access device; measure signal quality of at least one wireless access device based on the signal measurement indication; and send the signal quality of the at least one wireless access device to the primary wireless access device; and
the primary wireless access device is configured to: receive the network access request sent by the terminal device; send the signal measurement indication to the terminal device; receive the signal quality of the at least one wireless access device that is sent by the terminal device;
determine a target wireless access device in the at least one wireless access device based on the signal quality of the at least one wireless access device; and indicate the target wireless access device to establish a network connection to the smart home device.

22. A computer-readable storage medium, wherein the computer-readable storage medium stores a computer program; and when the computer program is run on a computer, the network connection method according to any one of claims 1 to 4, the network connection method according to any one of claims 5 to 12, or the network connection method according to any one of claims 13 to 16 is implemented.
